# EUROPÄISCHE PATENTSCHRIFT

(11) **EP 2 778 318 B1**
(45) Veröffentlichungstag und Bekanntmachung des Hinweises auf die Patenterteilung: **20.04.2016**
(21) Anmeldenummer: 14154121.9
(22) Anmeldetag: 06.02.2014
(51) Int. Cl.: E04H 6/02, A01G 9/14, A01G 9/24, E04H 15/32, A01G 13/00, E04H 6/04

(54) **Vorrichtung zur Abdeckung oder Überdachung einer Grundfläche, eines raumbildenden Aufbaus oder einer Maschine**
Device for covering or roofing a ground area, a structure that forms an area or a machine
Dispositif de recouvrement ou de couverture d'une surface de base, d'une structure formant une pièce ou d'une machine

(30) Priorität: 06.02.2013 AT 952013
(43) Veröffentlichungstag der Anmeldung: 17.09.2014
(73) Patentinhaber: Kasmanhuber, Peter, 9871 Seeboden (AT)
(72) Erfinder: Kasmanhuber, Peter, 9871 Seeboden (AT)
(74) Vertreter: KLIMENT & HENHAPEL

(56) Entgegenhaltungen:
- FR-A1- 2 590 762
- FR-A1- 2 884 844
- GB-A- 2 426 986
- US-A- 3 065 574

## Beschreibung

### GEBIET DER ERFINDUNG

Die vorliegende Erfindung bezieht sich auf eine Vorrichtung zur Abdeckung oder Überdachung einer Grundfläche, eines raumbildenden Aufbaus oder einer Maschine, umfassend mindestens eine elastische Platte mit einer Außenseite und einer Innenseite, wobei die Vorrichtung mindestens einen Längsbalken umfasst, der in einer Höhe über und/oder in einem, vorzugsweise rechten, Winkel zu der Grundfläche, dem raumbildenden Aufbau oder der Maschine angeordnet ist, dass die mindestens eine Platte am Längsbalken befestigt ist und quer zur Längsachse des mindestens einen Längsbalkens auf zumindest einer Seite von diesem mit mindestens einem beweglichen Abschnitt absteht, dass der mindestens eine bewegliche Abschnitt eine dem Längsbalken gegenüber liegende Längskante beinhaltet und dass der mindestens eine bewegliche Abschnitt durch elastische Verformung von einer ersten Position in eine zweite Position überführbar ist, wobei der mindestens eine bewegliche Abschnitt in der ersten Position einen Innenraum begrenzt und in der zweiten Position eine Öffnung in den Innenraum freigibt.

### STAND DER TECHNIK

Die Notwendigkeit, Flächen, raumbildende Aufbauten oder Maschinen zu überdachen oder abzudecken, stellt sich bei unterschiedlichsten Aufgaben, wobei typische Anwendungen im Bereich des Kultivierens von Pflanzen zu finden sind. Beispielsweise kann eine solche Überdachung für ein Gewächshaus oder ein Hochbeet vorgesehen sein. Dabei kann bei Gewächshäusern die Überdachung den wesentlichen Bestandteil des Gewächshauses bilden, indem lediglich eine Grundfläche, vorzugsweise tunnelartig, abgedeckt bzw. überdacht wird.

Im Falle der Ausbildung eines Gewächshauses ist es aus der FR 2590762 A1 bekannt, lichtdurchlässige Platten aus Plastik, insbesondere Polycarbonat, zu halbkreisförmigen Bögen zu biegen und die Längskanten der gebogenen Platten in einem Rahmen zu fixieren. Mehrere solcher Bögen können zu einem langen Tunnel mittels halbkreisförmiger Ringe verbunden werden. Nachteilig an dieser Lösung ist, dass zum Öffnen, bzw. um Zugang zur abgedeckten Grundfläche zu erhalten, die gesamte Konstruktion mit Rahmen von einer Längsseite her angehoben bzw. aufgeklappt und auf einem dafür vorgesehenen separaten, im Boden verankerten Stützpfeiler abgestützt werden muss. Insbesondere bei größeren Konstruktionen erfordert dies einen erheblichen Kraftaufwand, der von einem einzigen Benutzer mitunter nur schwer oder gar nicht aufgebracht werden kann. Eine einfache Adaption der Vorrichtung zur Abdeckung oder Überdachung von raumbildenden Aufbauten oder Maschinen ist zudem nicht erkennbar.

Aus der US 3065574 A sind streifenförmige Elemente aus Plastik zur Ausbildung einer Abdeckung für z.B. Garagen oder Strandkabinen bekannt. Die streifenförmigen Elemente können mit horizontal verlaufenden Querbalken verbunden werden, welche Querbalken an gekrümmten Längsbalken befestigt sind. Die Enden der streifenförmigen Elemente können an quer verlaufenden Strukturelementen am Boden befestigt werden. Hierdurch werden die streifenförmigen Elemente elastisch verformt und über die Längsbalken gespannt.

### AUFGABE DER ERFINDUNG

Ziel der vorliegenden Erfindung ist es, die oben genannten Nachteile zu vermeiden. Insbesondere soll eine Vorrichtung zur Verfügung gestellt werden, die zur Abdeckung oder Überdachung sowohl einer Grundfläche als auch eines raumbildenden Aufbaus oder einer Maschine geeignet ist und einen Öffnungsmechanismus vorsieht. Hierbei soll das Öffnen für den Benutzer unkompliziert und ohne nennenswerte Kraftanstrengung vonstatten gehen. Insbesondere im Falle der Abdeckung einer Grundfläche soll mit der Vorrichtung selbst auch ein raumbildender Aufbau realisiert werden können. Dieser soll nicht auf raumbildende Aufbauten im Bereich der Kultivierung von Pflanzen, wie beispielsweise auf Gewächshäuser, beschränkt sein, sondern auch andere Aufbauten, beispielsweise Garagen, ermöglichen.

### DARSTELLUNG DER ERFINDUNG

Kern der Erfindung ist es, für eine Abdeckung oder Überdachung einer Grundfläche, eines raumbildenden Aufbaus oder einer Maschine elastische Platten vorzusehen und die elastische Verformbarkeit dieser Platten für ein unkompliziertes Öffnen der Abdeckung/Überdachung zu nutzen. Aufgrund der Elastizität der Platten gestaltet sich das Öffnen für den Benutzer ohne nennenswerten Kraftaufwand. Beispiele für raumbildende Aufbauten sind Hochbeete, Sandkisten oder Gartenhäuschen. Als Beispiele für die Abdeckung von Maschinen sind Schutzabdeckungen von spanabtragenden Maschinen zu nennen. Hierunter fällt z.B. eine Abdeckung, die über dem Spannfutter einer Drehmaschine angeordnet ist.

Hierzu wird eine Platte, die eine Außenseite und eine Innenseite aufweist, an einem Längsbalken befestigt bzw. fixiert. D.h. der am Längsbalken befestigte Abschnitt der Platte ist vorzugsweise unbeweglich fixiert. Die Platte muss dabei nicht den gesamten Längsbalken entlang dessen Längsachse abdecken, es können auch mehrere Platten entlang der Längsachse des Längsbalkens hintereinander angeordnet werden, um den Längsbalken in dessen Längsrichtung vollständig zu überdecken. Der Längsbalken ist dabei in einer gewissen Höhe über der Grundfläche bzw. über dem raumbildenden Aufbau oder der Maschine angeordnet.

Die Platte steht quer zur Längsrichtung des Längsbalkens zumindest auf einer Seite von diesem ab. Die Elastizität der Platte wird nun zumindest in einem Abschnitt der Platte ausgenutzt, indem dieser Abschnitt beweglich gestaltet ist. Dieser bewegliche Abschnitt weist eine Längskante auf, die dem Längsbalken gegenüber liegt. D.h. die Längskante, die natürlich auch gleichzeitig die Längskante der Platte ist, verläuft entweder parallel zur Längsachse des Längsbalkens oder schließt mit dieser einen Winkel kleiner als 90° ein. Aus dem oben Gesagten ergibt sich, dass die Längskante in Richtung der Längsachse des Längsbalkens gemessen nicht dieselbe Länge wie der Längsbalken aufweisen muss, sondern auch kürzer - oder aber auch länger - sein kann.

Aufgrund der Schwerkraft und der Erstreckung des beweglichen Abschnitts quer zur Längsrichtung des Längsbalkens bis zur Längskante wirkt ein erstes Drehmoment, welches den beweglichen Abschnitt, insbesondere im Bereich von dessen Längskante nach unten in Richtung der Schwerkraft zieht. Die Elastizität bzw. Eigenspannung der Platte bzw. des beweglichen Abschnitts wirkt diesem ersten Drehmoment entgegen, d.h. es kommt zu einem ersten Rückstelldrehmoment aufgrund der Elastizität der Platte.

Je nach Auslegung der Platte kann sich bei einer gewissen Stellung des beweglichen Abschnitts ein Gleichgewicht zwischen dem ersten Drehmoment und dem ersten Rückstelldrehmoment einstellen, sodass die Längskante des beweglichen Abschnitts von der Schwerkraft nicht notwendigerweise bis zur Grundfläche bzw. bis zum raumbildenden Aufbau oder zur Maschine gezogen wird. Selbstverständlich kann jedoch auch das erste Drehmoment dominieren, sodass die Längskante des beweglichen Abschnitts auf der Grundfläche bzw. dem raumbildenden Aufbau oder der Maschine zu liegen kommt.

Insbesondere letztere Stellung eignet sich als eine erste Position, in welcher der bewegliche Abschnitt einen Innenraum, über der Grundfläche bzw. über dem raumbildenden Aufbau oder der Maschine, begrenzt. Durch Bewegen des beweglichen Abschnitts gegen das erste Drehmoment bzw. durch Bewegen der Längskante gegen die Schwerkraft kann der bewegliche Abschnitt in eine zweite Position überführt werden. In dieser zweiten Position wird eine Öffnung in den Innenraum freigegeben.

Entsprechend ist es bei einer Vorrichtung zur Abdeckung oder Überdachung einer Grundfläche, eines raumbildenden Aufbaus oder einer Maschine, umfassend mindestens eine elastische Platte mit einer Außenseite und einer Innenseite, erfindungsgemäß vorgesehen, dass die Vorrichtung mindestens einen Längsbalken umfasst, der in einer Höhe über und/oder in einem, vorzugsweise rechten, Winkel zu der Grundfläche oder dem raumbildenden Aufbau angeordnet ist, dass die mindestens eine Platte am Längsbalken befestigt ist und quer zur Längsachse des mindestens einen Längsbalkens auf zumindest einer Seite von diesem mit mindestens einem beweglichen Abschnitt absteht, dass der mindestens eine bewegliche Abschnitt eine dem Längsbalken gegenüber liegende Längskante beinhaltet und dass der mindestens eine bewegliche Abschnitt durch elastische Verformung von einer ersten Position in eine zweite Position überführbar ist, wobei der mindestens eine bewegliche Abschnitt in der ersten Position einen Innenraum begrenzt und in der zweiten Position eine Öffnung in den Innenraum freigibt.

Indem der Längsbalken bzw. in einem, vorzugsweise rechten Winkel zur Grundfläche angeordnet ist, kann die erfindungsgemäße Vorrichtung auch als Tür verwendet werden. Die Tür wird geöffnet, indem der bewegliche Abschnitt von der ersten Position in die zweite Position überführt wird. Bei geschlossener Tür, d.h. in der ersten Position des beweglichen Abschnitts, wird der Innenraum begrenzt; bei geöffneter Tür, d.h. in der zweiten Position des beweglichen Abschnitts, wird die Öffnung in den Innenraum freigegeben. Unter Innenraum ist nicht zwingend ein vollständig geschlossenes Volumen zu verstehen. Wenn z.B. die Tür in einem Zaun im Freien eingesetzt wird, dann ist unter Innenraum der vom Zaun begrenzte Raum zu verstehen, der in der Regel nach oben hin offen sein wird. Weitere ähnliche Anwendungen der erfindungsgemäßen Vorrichtung betreffen den Einsatz als Wartungsklappe, um bei einer Maschine einen einfachen Zugang zu Teilen der Maschine zu gewährleisten, die gewartet werden müssen. Wartungsklappen, welche mit einer erfindungsgemäßen Vorrichtung realisiert werden, können aber auch ortsfest im Bauwesen eingesetzt werden, um z.B. den Zugriff auf Installationen zu ermöglichen. Schließlich ist auch der Einsatz als leicht zu öffnende Beschickungsklappe vorstellbar, welche die Zuführung von Material zu einer Verarbeitungsvorrichtung ermöglicht. Entsprechend ist erfindungsgemäß die Verwendung einer erfindungsgemäßen Vorrichtung als Tür, Wartungsklappe oder Beschickungsklappe vorgesehen.

Da bei der Verwendung als Tür, Wartungs- oder Beschickungsklappe, insbesondere wenn die Längsrichtung des Längsbalkens senkrecht steht, die Schwerkraft den beweglichen Abschnitt nicht notwendigerweise in dessen erster Position hält oder ihn in dessen erste Position bewegen würde, kann die Elastizität der Platte zu diesem Zweck verwendet werden. D.h. die Platte kann so ausgelegt werden, dass die Elastizität der Platte bzw. des beweglichen Abschnitts dem Drehmoment, welches zum Öffnen aufgewendet werden muss, entgegenwirkt und der bewegliche Abschnitt ohne Einwirkung von außen in der ersten Position bleibt.

Um eine besonders große und/oder eine bequem zugängliche Öffnung zu schaffen, ist es bei einer bevorzugten Ausführungsform der erfindungsgemäßen Vorrichtung vorgesehen, dass der mindestens eine bewegliche Abschnitt in seiner zweiten Position gekrümmt ist, wobei Teile der Außenseite des mindestens einen beweglichen Abschnitts einander zugewandt sind, wobei insbesondere mindestens ein Teil der Außenseite im Bereich der Längskante des mindestens einen beweglichen Abschnitts mindestens einem Teil der Außenseite im Bereich des mindestens einen Längsbalkens zugewandt ist. Die Elastizität der Platte ermöglicht eine solche Anordnung. Hierbei bedeutet "zugewandt", dass die Außenseite des mindestens einen beweglichen Abschnitts zumindest abschnittsweise konvex gekrümmt ist. D.h. jede gerade Verbindungsstrecke zwischen zwei Punkten eines konvex gekrümmten Abschnitts der Außenseite des mindestens einen beweglichen Abschnitts liegt insofern über dem entsprechenden Abschnitt der Außenseite des mindestens einen beweglichen Abschnitts als der entsprechende Abschnitt der Außenseite des mindestens einen beweglichen Abschnitts zur Verbindungsstrecke weist. Der entsprechende Abschnitt der Innenseite des mindestens einen beweglichen Abschnitts weist hingegen von der Verbindungsstrecke weg.

Um den beweglichen Abschnitt in der zweiten Position zu halten, können Haltemittel wie beispielsweise Ketten oder Schnüre vorgesehen sein. Um die Befestigung von solchen Haltemitteln am beweglichen Abschnitt zu ermöglichen, ist es bei einer bevorzugten Ausführungsform der erfindungsgemäßen Vorrichtung vorgesehen, dass an der Außenseite im Bereich der Längskante des mindestens einen beweglichen Abschnitts ein Befestigungsmittel, vorzugsweise eine Öse, für mindestens ein Haltemittel, vorzugsweise für eine Schnur vorgesehen ist. Insbesondere wenn in Längsrichtung des Längsbalkens gesehen mehrere Platten bzw. mehrere bewegliche Abschnitte hintereinander angeordnet sind, sind mehrere Haltemittel bzw. Schnüre notwendig, vorzugsweise eine Schnur pro beweglichen Abschnitt. Diese Schnüre verlaufen dann vorzugsweise parallel zueinander. Es können aber natürlich auch mehrere Haltemittel bzw. Schnüre für denselben beweglichen Abschnitt vorgesehen sein, beispielsweise wenn die Größe und damit das Gewicht des beweglichen Abschnitts dies empfehlenswert erscheinen lässt.

Um den beweglichen Abschnitt in der zweiten Position zu halten, kann ein elastisches Haltemittel, beispielsweise eine elastische Schnur oder eine Zugfeder, verwendet werden, das an der Öse des beweglichen Abschnitts befestigt und gespannt ist. Zur Spannung einer elastischen Schnur kann diese beispielsweise mit einem Ende an einem von der Vorrichtung unabhängigen Fixpunkt befestigt sein. Die Spannung und Stärke der elastischen Schnur ist dabei so zu bemessen, dass die elastische Schnur den beweglichen Abschnitt auch dann in der zweiten Position zu halten vermag, wenn dieser soweit gebogen bzw. gekrümmt ist, dass aufgrund der Elastizität der Platte jedenfalls ein zweites Rückstelldrehmoment wirkt, welches den beweglichen Abschnitt in die erste Position bewegen würde bzw. welches gleichgerichtet ist zum gegebenenfalls vorhandenen ersten Drehmoment. Entsprechend ist es bei einer bevorzugten Ausführungsform der erfindungsgemäßen Vorrichtung vorgesehen, dass mindestens ein elastisches Haltemittel, vorzugsweise mindestens eine elastische Schnur oder mindestens eine Zugfeder, am Befestigungsmittel des mindestens einen beweglichen Abschnitts befestigt und gespannt ist, dessen Federkraft den mindestens einen beweglichen Abschnitt in seiner zweiten Position hält.

Es versteht sich, dass die Spannung bzw. Federkraft des elastischen Haltemittels bzw. der elastischen Schnur auch die Überführung des beweglichen Abschnitts von der ersten in die zweite Position unterstützt. D.h. der Benutzer kann den beweglichen Abschnitt von der ersten in die zweite Position mit äußerst geringem Kraftaufwand überführen.

Im Falle der Verwendung der Vorrichtung als Tür, Wartungsklappe oder Beschickungsklappe ermöglicht dies ein äußerst kräfteschonendes Öffnen der Tür, Wartungsklappe oder Beschickungsklappe. Die elastische Platte und das mindestens eine elastische Haltemittel können außerdem so aufeinander abgestimmt sein, dass der bewegliche Abschnitt ohne äußere Einwirkung in der ersten Position bleibt.

Eine besonders einfache Konstruktion der erfindungsgemäßen Vorrichtung zur ergibt sich, wenn zu beiden Seiten des Längsbalkens bewegliche Abschnitte angeordnet sind und das elastische Haltemittel bzw. die elastische Schnur oder die Zugfeder zwischen dem einen beweglichen Abschnitt und dem gegenüberliegenden, anderen beweglichen Abschnitt gespannt ist. Somit lassen sich mit einer einzigen elastischen Schnur die beiden beweglichen Abschnitte in ihrer zweiten Position halten. Ebenso unterstützt die elastische Schnur aufgrund ihrer Spannung bzw. Federkraft das Überführen des einen und des anderen beweglichen Abschnitts von der ersten in die zweite Position. Ihre maximale Spannung weist die elastische Schnur auf, wenn der eine und der andere bewegliche Abschnitt in ihrer ersten Position sind. Die elastische Schnur verläuft dann zumindest abschnittsweise entlang, vorzugsweise auf, der Außenseite der Platte. Entsprechend ist es bei einer bevorzugten Ausführungsform der erfindungsgemäßen Vorrichtung vorgesehen, dass das mindestens eine Haltemittel, das Befestigungsmittel eines beweglichen Abschnitts mit dem Befestigungsmittel eines anderen beweglichen Abschnitts verbindet, wobei der eine bewegliche Abschnitt und der andere bewegliche Abschnitt quer zur Längsachse des Längsbalkens auf gegenüberliegenden Seiten von diesem angeordnet sind, dass das mindestens eine elastische Haltemittel zwischen den Befestigungsmitteln gespannt ist und dass das mindestens eine Haltemittel zumindest abschnittsweise entlang der Außenseite der mindestens einen elastischen Platte verläuft, wenn sich der eine bewegliche Abschnitt und der andere bewegliche Abschnitt in ihrer ersten Position befinden.

Um eine besonders einfache Konstruktion zu realisieren, ist es bei einer bevorzugten Ausführungsform der erfindungsgemäßen Vorrichtung vorgesehen, dass der eine bewegliche Abschnitt und der andere bewegliche Abschnitt, die mittels des mindestens einen elastischen Haltemittels, vorzugsweise mittels der mindestens einen elastischen Schnur oder der Zugfeder, verbunden sind, jeweils zur selben elastischen Platte gehören.

Die Höhe des Innenraums über der Grundfläche bzw. über dem raumbildenden Aufbau wird maßgeblich durch die Höhe des Längsbalkens bestimmt. Ist zwischen dem einen und dem anderen beweglichen Abschnitt jeweils nur ein Längsbalken angeordnet, nimmt die Höhe des Innenraums quer zur Längsrichtung des Längsbalkens entsprechend schnell ab. Um einen Bereich des Innenraums zu erhalten, dessen Höhe in Richtung quer zur Längsrichtung des Längsbalkens nicht abnimmt, ist es bei einer bevorzugten Ausführungsform der erfindungsgemäßen Vorrichtung vorgesehen, dass zwischen dem einen beweglichen Abschnitt und dem anderen beweglichen Abschnitt mindestens zwei Längsbalken angeordnet sind. Zwischen diesen mindestens zwei Längsbalken ist vorzugsweise mindestens ein unbeweglicher Abschnitt der Platte angeordnet. Auf diese Weise lassen sich mit der erfindungsgemäßen Vorrichtung raumbildende Aufbauten realisieren, die auch über große Bereiche in Richtung quer zur Längsrichtung der Längsbalken eine vorgebbare Höhe aufweisen. Dies erleichtert beispielsweise deren Nutzung als Garagen.

Alternativ zum elastischen Haltemittel kann auch ein unelastisches Haltemittel, beispielsweise eine unelastische Schnur oder eine Kette, dazu verwendet werden, einen beweglichen Abschnitt in der zweiten Position zu halten. Hierbei kann das unelastische Haltemittel mittels einer Spannvorrichtung gespannt werden. Diese Spannvorrichtung kann dafür sorgen, dass das unelastische Haltemittel auch bei der Überführung des beweglichen Abschnitts von der ersten in die zweite Position stets gespannt bleibt. Eine solche Spannvorrichtung lässt sich beispielsweise mittels eines Gewichts, das an einem Ende des unelastischen Haltemittels befestigt ist, realisieren. Natürlich wirkt in diesem Fall die Gewichtskraft auch bei der Überführung des beweglichen Abschnitts von der ersten in die zweite Position unterstützend, sodass der Benutzer nur eine geringe Kraft aufwenden muss. Alternativ wäre beispielsweise auch der Einsatz einer motorisierten Winde zur Spannung des unelastischen Haltemittels denkbar. Entsprechend ist es bei einer bevorzugten Ausführungsform der erfindungsgemäßen Vorrichtung vorgesehen, dass mindestens ein unelastisches Haltemittel, vorzugsweise eine unelastische Schnur oder eine Kette, am Befestigungsmittel des mindestens einen beweglichen Abschnitts befestigt und, vorzugsweise mittels eines Gewichts oder einer motorisierten Winde, gespannt ist, um den mindestens einen beweglichen Abschnitt in seiner zweiten Position zu halten. Eine solche Lösung kann selbstverständlich auch bei der Verwendung als Tür vorgesehen werden.

Bei einer besonders bevorzugten Ausführungsform der erfindungsgemäßen Vorrichtung ist es vorgesehen, dass der mindestens eine bewegliche Abschnitt in seiner ersten Position gekrümmt ist, wobei Teile der Innenseite des mindestens einen beweglichen Abschnitts einander zugewandt sind, wobei insbesondere mindestens ein Teil der Innenseite im Bereich der Längskante des mindestens einen beweglichen Abschnitts mindestens einem Teil der Innenseite im Bereich des mindestens einen Längsbalkens zugewandt ist. D.h. es liegt zumindest abschnittsweise eine konvexe Krümmung der Innenseite des mindestens einen beweglichen Abschnitts in der ersten Position vor - analog zur oben beschriebenen, abschnittsweisen konvexen Krümmung der Außenseite in der zweiten Position. Durch diese Krümmung der beweglichen Abschnitte in ihrer ersten Position ergibt sich ein besonders großes Volumen des Innenraums.

Indem mindestens ein beweglicher Abschnitt zu mindestens einer Seite quer zur Längsachse des Längsbalkens angeordnet wird, kann ein Zugang in den Innenraum bzw. auf die Grundfläche oder zum raumbildenden Aufbau von einer Richtung quer zur Längsachse des Längsbalkens erfindungsgemäß gewährleistet werden. Insbesondere wenn zusätzlich auch ein Zugang von einer Richtung parallel zur Längsachse des Längsbalkens gewünscht ist, kann zusätzlich eine völlig analoge Anordnung mit mindestens einem Querbalken und zusätzlichen beweglichen Abschnitten vorgesehen werden.

Mindestens eine elastische Platte steht dann quer zur Längsrichtung des Querbalkens zumindest auf einer Seite von diesem ab. Jeder zusätzliche bewegliche Abschnitt weist eine Querkante auf, die dem Querbalken gegenüber liegt. D.h. die Querkante, die natürlich auch gleichzeitig die Querkante der Platte ist, verläuft entweder parallel zur Längsachse des Querbalkens oder schließt mit dieser einen Winkel kleiner als 90° ein. Aus dem oben Gesagten ergibt sich, dass die Querkante in Richtung der Längsachse des Querbalkens gemessen nicht dieselbe Länge wie der Querbalken aufweisen muss, sondern auch kürzer - oder aber auch länger - sein kann.

Aufgrund der Schwerkraft und der Erstreckung des zusätzlichen beweglichen Abschnitts quer zur Längsrichtung des Querbalkens bis zur Querkante wirkt ein zweites Drehmoment, welches den zusätzlichen beweglichen Abschnitt, insbesondere im Bereich von dessen Querkante nach unten in Richtung der Schwerkraft zieht. Die Elastizität der Platte bzw. des zusätzlichen beweglichen Abschnitts wirkt diesem zweiten Drehmoment entgegen, d.h. es kommt zu einem dritten Rückstelldrehmoment aufgrund der Elastizität der Platte.

Je nach Auslegung der Platte kann sich bei einer gewissen Stellung des zusätzlichen beweglichen Abschnitts ein Gleichgewicht zwischen dem zweiten Drehmoment und dem dritten Rückstelldrehmoment einstellen, sodass die Querkante des zusätzlichen beweglichen Abschnitts von der Schwerkraft nicht notwendigerweise bis zur Grundfläche bzw. bis zum raumbildenden Aufbau gezogen wird. Selbstverständlich kann jedoch auch das zweite Drehmoment dominieren, sodass die Querkante des zusätzlichen beweglichen Abschnitts auf der Grundfläche bzw. dem raumbildenden Aufbau zu liegen kommt.

Insbesondere letztere Stellung eignet sich als eine dritte Position, in welcher der zusätzliche bewegliche Abschnitt den Innenraum über der Grundfläche bzw. über dem raumbildenden Aufbau oder der Maschine begrenzt. Durch Bewegen des zusätzlichen beweglichen Abschnitts gegen das zweite Drehmoment bzw. durch Bewegen der Querkante gegen die Schwerkraft kann der zusätzliche bewegliche Abschnitt in eine vierte Position überführt werden. In dieser vierten Position wird eine zusätzliche Öffnung in den Innenraum freigegeben

Entsprechend ist es bei einer besonders bevorzugten Ausführungsform der erfindungsgemäßen Vorrichtung vorgesehen, dass mindestens ein Querbalken vorgesehen ist, dessen Längsachse quer, vorzugsweise normal zur Längsachse des mindestens einen Längsbalkens verläuft, dass der mindestens eine Querbalken in einer Höhe, vorzugsweise derselben Höhe wie der mindestens eine Längsbalken, über der Grundfläche, dem raumbildenden Aufbau oder der Maschine angeordnet ist, dass die mindestens eine elastische Platte am mindestens einen Querbalken befestigt ist und quer zur Längsachse des mindestens einen Querbalkens auf zumindest einer Seite von diesem mit mindestens einem zusätzlichen beweglichen Abschnitt absteht, dass der mindestens eine zusätzliche bewegliche Abschnitt eine dem Querbalken gegenüber liegende Querkante beinhaltet und dass der mindestens eine zusätzliche bewegliche Abschnitt durch elastische Verformung von einer dritten Position in eine vierte Position überführbar ist, wobei der mindestens eine zusätzliche bewegliche Abschnitt in der dritten Position den Innenraum begrenzt und in der vierten Position eine zusätzliche Öffnung in den Innenraum freigibt.

Um eine besonders große und/oder eine bequem zugängliche zusätzliche Öffnung zu schaffen, ist es bei einer bevorzugten Ausführungsform der erfindungsgemäßen Vorrichtung vorgesehen, dass der mindestens eine zusätzliche bewegliche Abschnitt in seiner vierten Position gekrümmt ist, wobei Teile der Außenseite des mindestens einen zusätzlichen beweglichen Abschnitts einander zugewandt sind, wobei insbesondere mindestens ein Teil der Außenseite im Bereich der Querkante des mindestens einen zusätzlichen beweglichen Abschnitts mindestens einem Teil der Außenseite im Bereich des mindestens einen Querbalkens zugewandt ist. Die Elastizität der Platte ermöglicht eine solche Anordnung. Hierbei bedeutet "zugewandt", dass die Außenseite des mindestens einen zusätzlichen beweglichen Abschnitts zumindest abschnittsweise konvex gekrümmt ist.

Um die Befestigung von Haltemitteln am zusätzlichen beweglichen Abschnitt zu ermöglichen, ist es bei einer bevorzugten Ausführungsform der erfindungsgemäßen Vorrichtung vorgesehen, dass an der Außenseite im Bereich der Querkante des mindestens einen zusätzlichen beweglichen Abschnitts ein Befestigungsmittel, vorzugsweise eine Öse, für mindestens ein zusätzliches Haltemittel, vorzugsweise für mindestens eine zusätzliche Schnur vorgesehen ist. Insbesondere wenn in Längsrichtung des Querbalkens gesehen mehrere Platten bzw. mehrere zusätzliche bewegliche Abschnitte hintereinander angeordnet sind, sind mehrere zusätzliche Haltemittel bzw. zusätzliche Schnüre notwendig, vorzugsweise eine zusätzliche Schnur pro zusätzlichen beweglichen Abschnitt. Diese zusätzlichen Schnüre verlaufen dann vorzugsweise parallel zueinander. Es können aber natürlich auch mehrere zusätzliche Haltemittel bzw. Schnüre für denselben zusätzlichen beweglichen Abschnitt vorgesehen sein, beispielsweise wenn die Größe und damit das Gewicht des zusätzlichen beweglichen Abschnitts dies empfehlenswert erscheinen lässt.

Um den zusätzlichen beweglichen Abschnitt in der vierten Position zu halten, kann ein zusätzliches elastisches Haltemittel, vorzugsweise eine zusätzliche elastische Schnur oder eine zusätzliche Zugfeder, verwendet werden, das an der Öse des zusätzlichen beweglichen Abschnitts befestigt und gespannt ist. Zur Spannung einer zusätzlichen elastischen Schnur kann diese beispielsweise mit einem Ende an einem von der Vorrichtung unabhängigen Fixpunkt befestigt sein. Die Spannung und Stärke der zusätzlichen elastischen Schnur ist dabei so zu bemessen, dass die zusätzliche elastische Schnur den zusätzlichen beweglichen Abschnitt auch dann in der vierten Position zu halten vermag, wenn dieser soweit gebogen bzw. gekrümmt ist, dass aufgrund der Elastizität der Platte ein viertes Rückstelldrehmoment wirkt, welches gleichgerichtet ist zum zweiten Drehmoment. Entsprechend ist es bei einer bevorzugten Ausführungsform der erfindungsgemäßen Vorrichtung vorgesehen, dass mindestens ein zusätzliches elastisches Haltemittel, vorzugsweise mindestens eine zusätzliche elastische Schnur oder mindestens eine zusätzliche Zugfeder, am Befestigungsmittel des mindestens einen zusätzlichen beweglichen Abschnitts befestigt und gespannt ist, dessen Federkraft den mindestens einen zusätzlichen beweglichen Abschnitt in seiner vierten Position hält.

Es versteht sich, dass die Spannung bzw. Federkraft des zusätzlichen elastischen Haltemittels bzw. der zusätzlichen elastischen Schnur auch die Überführung des zusätzlichen beweglichen Abschnitts von der dritten in die vierte Position unterstützt. D.h. der Benutzer kann den zusätzlichen beweglichen Abschnitt von der dritten in die vierte Position mit äußerst geringem Kraftaufwand überführen.

Eine besonders einfache Konstruktion ergibt sich, wenn zu beiden Seiten des Querbalkens zusätzliche bewegliche Abschnitte angeordnet sind und das zusätzliche elastische Haltemittel bzw. die zusätzliche elastische Schnur oder die zusätzliche Zugfeder zwischen dem einen zusätzlichen beweglichen Abschnitt und dem gegenüberliegenden, anderen zusätzlichen beweglichen Abschnitt gespannt ist. Somit lassen sich mit einer einzigen zusätzlichen elastischen Schnur die beiden zusätzlichen beweglichen Abschnitte in ihrer vierten Position halten. Ebenso unterstützt das zusätzliche elastische Haltemittel bzw. die zusätzliche elastische Schnur oder die zusätzliche Zugfeder aufgrund ihrer Spannung bzw. Federkraft das Überführen des einen und des anderen zusätzlichen beweglichen Abschnitts von der dritten in die vierte Position. Ihre maximale Spannung weist die zusätzliche elastische Schnur auf, wenn der eine und der andere zusätzliche bewegliche Abschnitt in ihrer dritten Position sind. Die zusätzliche elastische Schnur verläuft dann zumindest abschnittsweise entlang, vorzugsweise auf, der Außenseite der Platte. Entsprechend ist es bei einer bevorzugten Ausführungsform der erfindungsgemäßen Vorrichtung vorgesehen, dass das mindestens eine zusätzliche elastische Haltemittel das Befestigungsmittel eines zusätzlichen beweglichen Abschnitts mit dem Befestigungsmittel eines anderen zusätzlichen beweglichen Abschnitts verbindet, wobei der eine zusätzliche bewegliche Abschnitt und der andere zusätzliche bewegliche Abschnitt quer zur Längsachse des Querbalkens auf gegenüberliegenden Seiten von diesem angeordnet sind, dass das mindestens eine zusätzliche elastische Haltemittel zwischen den Befestigungsmitteln gespannt ist und dass das mindestens eine zusätzliche elastische Haltemittel zumindest abschnittsweise entlang der Außenseite der mindestens einen elastischen Platte verläuft, wenn sich der eine zusätzliche bewegliche Abschnitt und der andere zusätzliche bewegliche Abschnitt in ihrer dritten Position befinden.

Um eine besonders einfache Konstruktion zu realisieren, ist es bei einer bevorzugten Ausführungsform der erfindungsgemäßen Vorrichtung vorgesehen, dass der eine zusätzliche bewegliche Abschnitt und der andere zusätzliche bewegliche Abschnitt, die mittels des mindestens einen zusätzlichen elastischen Haltemittels verbunden sind, jeweils zur selben elastischen Platte gehören.

Beziehungsweise ist es bei einer besonders bevorzugten Ausführungsform der erfindungsgemäßen Vorrichtung vorgesehen, dass zu dieser elastischen Platte jeweils auch der eine bewegliche Abschnitt und der andere bewegliche Abschnitt gehören. D.h. die elastische Platte weist in diesem Fall den einen beweglichen Abschnitt und den anderen beweglichen Abschnitt sowie den einen zusätzlichen beweglichen Abschnitt und den anderen zusätzlichen beweglichen Abschnitt auf.

Die Höhe des Innenraums über der Grundfläche bzw. über dem raumbildenden Aufbau wird maßgeblich nicht nur durch die Höhe des Längsbalkens, sondern auch durch die Höhe des Querbalkens bestimmt. Ist zwischen dem einen und dem anderen zusätzlichen beweglichen Abschnitt jeweils nur ein Querbalken angeordnet, nimmt die Höhe des Innenraums quer zur Längsrichtung des Querbalkens entsprechend schnell ab. Um einen Bereich des Innenraums zu erhalten, dessen Höhe in Richtung quer zur Längsrichtung des Querbalkens nicht abnimmt, ist es bei einer bevorzugten Ausführungsform der erfindungsgemäßen Vorrichtung vorgesehen, dass zwischen dem einen zusätzlichen beweglichen Abschnitt und dem anderen zusätzlichen beweglichen Abschnitt mindestens zwei Querbalken angeordnet sind. Zwischen diesen mindestens zwei Querbalken ist vorzugsweise mindestens ein unbeweglicher Abschnitt der Platte angeordnet. Auf diese Weise lassen sich mit der erfindungsgemäßen Vorrichtung raumbildende Aufbauten realisieren, die auch über große Bereiche in Richtung quer zur Längsrichtung der Querbalken eine vorgebbare Höhe aufweisen. Dies erleichtert beispielsweise deren Nutzung als Garagen.

Alternativ zum zusätzlichen elastischen Haltemittel kann auch ein zusätzliches unelastisches Haltemittel, vorzugsweise eine zusätzliche unelastische Schnur oder eine zusätzliche Kette, dazu verwendet werden, einen zusätzlichen beweglichen Abschnitt in der vierten Position zu halten. Hierbei kann das zusätzliche unelastische Haltemittel bzw. die zusätzliche unelastische Schnur oder die zusätzliche Kette mittels einer zusätzlichen Spannvorrichtung gespannt werden. Diese zusätzliche Spannvorrichtung kann dafür sorgen, dass das zusätzliche unelastische Haltemittel auch bei der Überführung des zusätzlichen beweglichen Abschnitts von der dritten in die vierte Position stets gespannt bleibt. Eine solche zusätzliche Spannvorrichtung lässt sich beispielsweise mittels eines zusätzlichen Gewichts, das an einem Ende des zusätzlichen unelastischen Haltemittels befestigt ist, realisieren. Natürlich wirkt in diesem Fall die Gewichtskraft auch bei der Überführung des zusätzlichen beweglichen Abschnitts von der dritten in die vierte Position unterstützend, sodass der Benutzer nur eine geringe Kraft aufwenden muss. Alternativ wäre beispielsweise auch der Einsatz einer zusätzlichen motorisierten Winde zur Spannung des zusätzlichen unelastischen Haltemittels denkbar. Entsprechend ist es bei einer bevorzugten Ausführungsform der erfindungsgemäßen Vorrichtung vorgesehen, dass mindestens ein zusätzliches unelastisches Haltemittel, vorzugsweise mindestens eine zusätzliche unelastische Schnur oder mindestens eine zusätzliche Kette, am Befestigungsmittel des mindestens einen zusätzlichen beweglichen Abschnitts befestigt und, vorzugsweise mittels eines zusätzlichen Gewichts oder einer zusätzlichen motorisierten Winde, gespannt ist, um den mindestens einen zusätzlichen beweglichen Abschnitt in seiner vierten Position zu halten.

Bei einer besonders bevorzugten Ausführungsform der erfindungsgemäßen Vorrichtung ist es vorgesehen, dass der mindestens eine zusätzliche bewegliche Abschnitt in seiner dritten Position gekrümmt ist, wobei Teile der Innenseite des mindestens einen zusätzlichen beweglichen Abschnitts einander zugewandt sind, wobei insbesondere mindestens ein Teil der Innenseite im Bereich der Querkante des mindestens einen zusätzlichen beweglichen Abschnitts mindestens einem Teil der Innenseite im Bereich des mindestens einen Querbalkens zugewandt ist. D.h. es liegt zumindest abschnittsweise eine konvexe Krümmung der Innenseite des mindestens einen zusätzlichen beweglichen Abschnitts in der dritten Position vor - analog zur oben beschriebenen, abschnittsweisen konvexen Krümmung der Außenseite in der vierten Position. Durch diese Krümmung der zusätzlichen beweglichen Abschnitte in ihrer dritten Position ergibt sich ein besonders großes Volumen des Innenraums.

Für den Einsatz der Vorrichtung im Bereich des Kultivierens von Pflanzen, beispielsweise für die Ausbildung eines Gewächshauses oder für die Abdeckung eines Hochbeets, ist Lichtdurchlässigkeit eine notwendige Voraussetzung. Entsprechend ist es bei einer bevorzugten Ausführungsform der erfindungsgemäßen Vorrichtung vorgesehen, dass die mindestens eine elastische Platte zumindest abschnittsweise transparent ist. Eine solche Ausführung erweist sich jedoch auch dann als günstig, wenn z.B. eine Garage aufgebaut werden soll. In diesem Fall wirken die transparenten Abschnitte der mindestens einen Platte als Fenster. Im Falle einer Abdeckung einer Maschine gestattet die Transparenz den Blick auf die unter der Abdeckung angeordneten Maschinenteile, beispielsweise auf ein Spannfutter einer Drehmaschine. Im Falle der Verwendung als Tür kann diese ebenfalls abschnittsweise transparent ausgeführt werden.

Ein Material, das nicht nur die geforderten elastischen Eigenschaften aufweist, sondern außerdem transparent ist, ist Plexiglas (Polymethylmethacrylat). Entsprechend ist es bei einer besonders bevorzugten Ausführungsform der erfindungsgemäßen Vorrichtung vorgesehen, dass die mindestens eine elastische Platte aus Plexiglas gefertigt ist.

Um den mindestens einen Längsbalken und/oder Querbalken jeweils in einer gewissen Höhe über der Grundfläche, dem raumbildenden Aufbau oder der Maschine zu positionieren, ist ein Rahmen vorgesehen, der auf der Grundfläche, dem raumbildenden Aufbau oder der Maschine angeordnet ist. Vorzugsweise wird der mindestens eine Längsbalken und/oder Querbalken von Trägern des Rahmens unterstützt. Entsprechend ist es bei einer bevorzugten Ausführungsform der erfindungsgemäßen Vorrichtung vorgesehen, dass der mindestens eine Längsbalken und/oder Querbalken mit einem Rahmen verbunden oder Teil des Rahmens ist, und dass der Rahmen Träger aufweist, die sich quer zum mindestens einen Längsbalken und/oder Querbalken und in Richtung von der Grundfläche, dem raumbildenden Aufbau oder der Maschine zum mindestens einen Längsbalken und/oder Querbalken erstrecken. Wie bereits festgehalten wirkt aufgrund der Elastizität der Platte in der ersten Position der beweglichen Abschnitte ein erstes Rückstelldrehmoment. Analog wirkt aufgrund der Elastizität der Platte in der dritten Position der zusätzlichen beweglichen Abschnitte ein drittes Rückstelldrehmoment. Diese Rückstelldrehmomente können dazu führen, dass die beweglichen Abschnitte und/oder die zusätzlichen beweglichen Abschnitte nicht in ihrer ersten/dritten Position verbleiben. Um die beweglichen Abschnitte in der ersten Position und/oder die zusätzlichen beweglichen Abschnitte in ihrer dritten Position zu fixieren, sind daher Sperrelemente vorgesehen. Bevorzugt sind diese an Rahmenelementen des Rahmens befestigt. Bei den Sperrelementen kann es sich beispielsweise um Riegel handeln oder um Haken, die in die Ösen der beweglichen und/oder zusätzlichen beweglichen Abschnitte einrasten. Entsprechend ist es bei einer bevorzugten Ausführungsform der erfindungsgemäßen Vorrichtung vorgesehen, dass der Rahmen Rahmenelemente umfasst, die auf der Grundfläche, dem raumbildenden Aufbau oder der Maschine angeordnet sind, wobei die Rahmenelemente den Innenraum vorzugsweise umfänglich umschließen, und dass mindestens ein an einem Rahmenelement angeordnetes Sperrelement vorgesehen ist, um den mindestens einen beweglichen Abschnitt und/oder zusätzlichen beweglichen Abschnitt in seiner ersten Position und/oder dritten Position zu fixieren. Gegebenenfalls können die Sperrelemente natürlich auch direkt auf einem raumbildenden Aufbau, beispielsweise einem Hochbeet, angeordnet sein.

Besonders effektiv lassen sich die beweglichen und/oder zusätzlichen beweglichen Abschnitte in ihrer ersten/dritten Position fixieren, wenn die Sperrelemente im Bereich der Längskanten und/oder Querkanten angreifen können. Entsprechend ist es bei einer bevorzugten Ausführungsform der erfindungsgemäßen Vorrichtung vorgesehen, dass das mindestens eine Sperrelement an einem Rahmenelement angeordnet ist, welches parallel zur Längsachse des mindestens einen Längsbalkens oder parallel zur Längsachse des mindestens einen Querbalkens verläuft.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine Schnittansicht einer erfindungsgemäßen Vorrichtung mit beweglichen Abschnitten jeweils in einer ersten Position und mit einer elastischen Schnur
- Fig. 2: eine Schnittansicht analog zu Fig. 1, jedoch mit einem beweglichen Abschnitt in einer zweiten Position
- Fig. 3: eine axonometrische Ansicht zu Fig. 2
- Fig. 4: eine Schnittansicht analog zu Fig. 1, jedoch mit beiden beweglichen Abschnitten in einer zweiten Position
- Fig. 5: eine axonometrische Ansicht der Vorrichtung aus Fig. 1, jedoch mit beiden beweglichen Abschnitten in einer Zwischenposition
- Fig. 6: eine Schnittansicht einer alternativen Ausführungsform der erfindungsgemäßen Vorrichtung mit beweglichen Abschnitten jeweils in einer ersten Position und mit einer elastischen Schnur
- Fig. 7: eine Schnittansicht analog zu Fig. 6, jedoch mit einem beweglichen Abschnitt in einer zweiten Position
- Fig. 8: eine Schnittansicht einer weiteren Ausführungsform der erfindungsgemäßen Vorrichtung mit einem beweglichen Abschnitt in einer ersten Position und mit einer unelastischen Schnur und einem an dieser befestigten Gewicht
- Fig. 9: eine Schnittansicht analog zu Fig. 9, jedoch mit dem beweglichen Abschnitt in einer zweiten Position
- Fig. 10: eine Schnittansicht einer weiteren Ausführungsform der erfindungsgemäßen Vorrichtung mit einem beweglichen Abschnitt in einer zweiten Position, einem anderen beweglichen Abschnitt in einer ersten Position, einem unbeweglichen Teil zwischen den beiden beweglichen Abschnitten und mit einer elastischen Schnur
- Fig. 11: eine axonometrische Ansicht einer weiteren Ausführungsform der erfindungsgemäßen Vorrichtung ähnlich zu Fig. 10, jedoch mit einem zusätzlichen beweglichen Abschnitt in einer vierten Position und einem anderen zusätzlichen beweglichen Abschnitt in einer dritten Position sowie mit elastischen Schnüren
- Fig. 12: eine axonometrische Ansicht einer erfindungsgemäßen Vorrichtung mit einer elastischen Schnur, wobei die Vorrichtung als Tür verwendet wird und sich der bewegliche Abschnitt in der ersten Position befindet
- Fig. 13: eine axonometrische Ansicht der Vorrichtung aus Fig. 12, jedoch mit dem beweglichen Abschnitt in der zweiten Position

### WEGE ZUR AUSFÜHRUNG DER ERFINDUNG

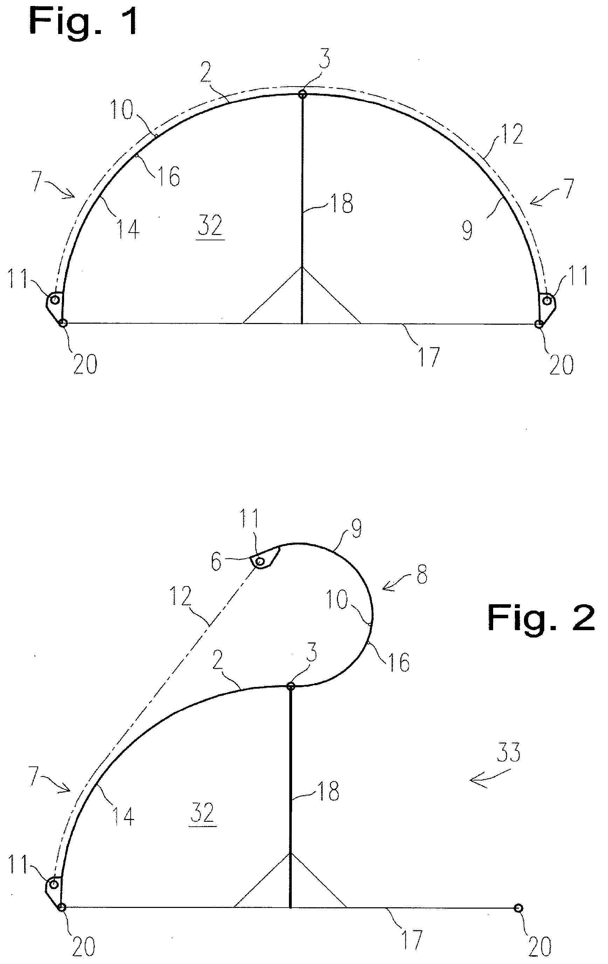

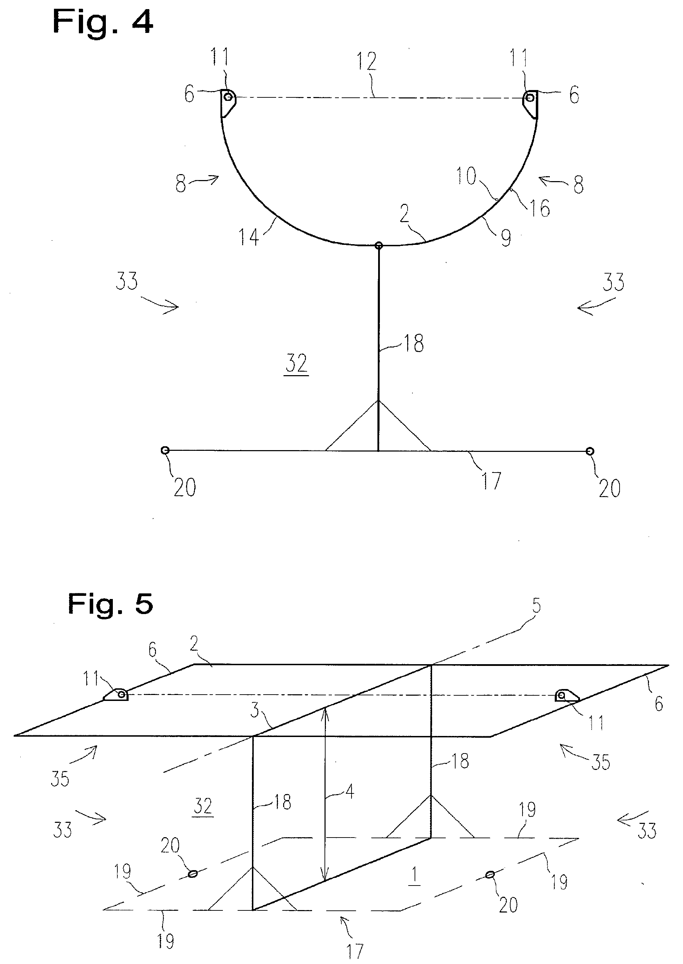

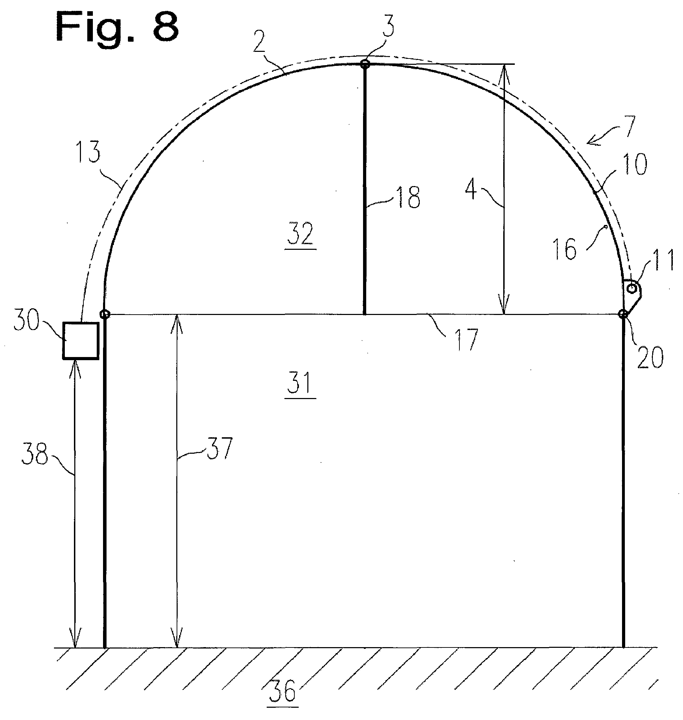

Fig. 1 zeigt eine Schnittansicht einer erfindungsgemäßen Vorrichtung zur Abdeckung oder Überdachung einer Grundfläche 1 (vgl. Fig. 5), eines raumbildenden Aufbaus, beispielsweise eines Hochbeets 31 (vgl. Fig. 8), oder einer Maschine. Der Schnitt verläuft senkrecht zur Längsachse 5 (vgl. Fig. 5) des Längsbalkens 3. Dieser wird mittels Träger 18 eines Rahmens 17 in einer Höhe 4 über der Grundfläche 1 (vgl. Fig. 5) oder dem Hochbeet 31 (vgl. Fig. 8) gehalten.

Am Längsbalken 3 ist eine elastische Platte 2 fixiert. Die elastische Platte 2 ist vorzugsweise aus Plexiglas gefertigt und weist einen beweglichen Abschnitt 9 und einen anderen beweglichen Abschnitt 14 auf, die sich quer zum Längsbalken 3 bzw. zu dessen Längsachse 5 erstrecken und einander gegenüberliegen. Der bewegliche Abschnitt 9 ist dabei in Fig. 1 rechts vom Längsbalken 3 angeordnet, der andere bewegliche Abschnitt 14 links vom Längsbalken 3. Im gezeigten Beispiel gehören der bewegliche Abschnitt 9 und der andere bewegliche Abschnitt 14 zur selben elastischen Platte 2. Es ist aber selbstverständlich auch möglich, dass der bewegliche Abschnitt 9 zu einer elastischen Platte 2 gehört und der andere bewegliche Abschnitt 14 Teil einer weiteren elastischen Platte 2 ist.

Der bewegliche Abschnitt 9 und der andere bewegliche Abschnitt 14 weisen jeweils eine Längskante 6 auf, die parallel zum Längsbalken 3 verläuft, vgl. Fig. 5. In Fig. 1 sind sowohl der bewegliche Abschnitt 9 als auch der andere bewegliche Abschnitt 14 in einer ersten Position 7 dargestellt. In dieser liegt die jeweilige Längskante 6 am Rahmen 17 an, sodass durch den beweglichen Abschnitt 9 und den anderen beweglichen Abschnitt 14 ein Innenraum 32 begrenzt wird.

Die elastische Platte 2 - und damit auch der bewegliche Abschnitt 9 sowie der andere bewegliche Abschnitt 14 - weist eine Außenseite 10 sowie eine Innenseite 16 auf. In der ersten Position 7 weist die Innenseite 16 in den Innenraum 32, die Außenseite 10 in die entgegengesetzte Richtung nach außen.

Im Ausführungsbeispiel der Fig. 1 sind der bewegliche Abschnitt 9 und der andere bewegliche Abschnitt 14 in ihrer ersten Position 7 gekrümmt. Bezüglich der Innenseite 16 liegt eine konvexe Krümmung vor, wodurch sich ein besonders großes Volumen des Innenraums 32 ergibt. Ein Teil der Innenseite 16 im Bereich der Längskante 6 des beweglichen Abschnitts 9 weist im in Fig. 1 gezeigten Fall zu einem Teil der Innenseite 16 des beweglichen Abschnitts 9 im Bereich des Längsbalkens 3.

Um den Innenraum 32 bzw. die Grundfläche 1 oder das Hochbeet 31 zugänglich zu machen, können der bewegliche Abschnitt 9 und der andere bewegliche Abschnitt 14 in eine zweite Position 8 gebracht werden. Fig. 2 zeigt in einer zur Fig. 1 analogen Schnittansicht den beweglichen Abschnitt 9 in der zweiten Position 8 und den anderen beweglichen Abschnitt 14 in der ersten Position 7. In der zweiten Position 8 ist der bewegliche Abschnitt 9 elastisch verformt und weist nun eine im Vergleich zu Fig. 1 entgegengesetzte Krümmung auf. D.h. in der zweiten Position 9 liegt eine konvexe Krümmung der Außenseite 10 vor. Ein Teil der Außenseite 10 im Bereich der Längskante 6 des beweglichen Abschnitts 9 weist im in Fig. 2 gezeigten Fall zu einem Teil der Außenseite 10 des beweglichen Abschnitts 9 im Bereich des Längsbalkens 3.

In der zweiten Position 8 gibt der bewegliche Abschnitt 9 somit eine - besonders große und damit bequem zugängliche - Öffnung 33 in den Innenraum 32 bzw. zur Grundfläche 1 oder dem Hochbeet 31 frei.

Um den beweglichen Abschnitt 9 in der zweiten Position 8 zu halten, ist im Ausführungsbeispiel der Fig. 2 eine elastische Schnur 12 vorgesehen. Diese ist mit jedem ihrer beiden Enden in jeweils einer Öse 11 befestigt. Die Ösen 11 sind dabei im Bereich der Längskante 6 an der Außenseite 10 des beweglichen Abschnitts 9 und des anderen beweglichen Abschnitts 14 befestigt. Die elastische Schnur 12 ist zwischen diesen beiden Ösen 11 so gespannt, dass die Federkraft der elastischen Schnur 12 den beweglichen Abschnitt 9 in der zweiten Position 8 hält. Es versteht sich, dass die Spannung bzw. Federkraft der elastischen Schnur 12 auch die Überführung des beweglichen Abschnitts 9 von der ersten 7 in die zweite Position 8 unterstützt. D.h. der Benutzer kann den beweglichen Abschnitt 9 von der ersten 7 in die zweite Position 8 mit äußerst geringem Kraftaufwand überführen.

Die elastische Schnur 12 verläuft in Fig. 2 abschnittsweise entlang der Außenseite 10 des anderen beweglichen Abschnitts 14. In Fig. 1 verläuft die elastische Schnur 12 entlang der Außenseite 10 des beweglichen Abschnitts 9 und des anderen beweglichen Abschnitts 14.

Um im Falle der Fig. 2 den anderen beweglichen Abschnitt 14 - bzw. im Falle der Fig. 1 auch den beweglichen Abschnitt 9 - in der ersten Position 7 zu halten, sind Sperrelemente 20 vorgesehen. Diese sind an Rahmenelemente 19 befestigt, die parallel zur Längsachse 5 des Längsbalkens 3 verlaufen, vgl. Fig. 5. Die Sperrelemente 20 können beispielsweise als Riegel ausgeführt sein oder als Haken, die mit den Ösen 11 in Eingriff gebracht werden können.

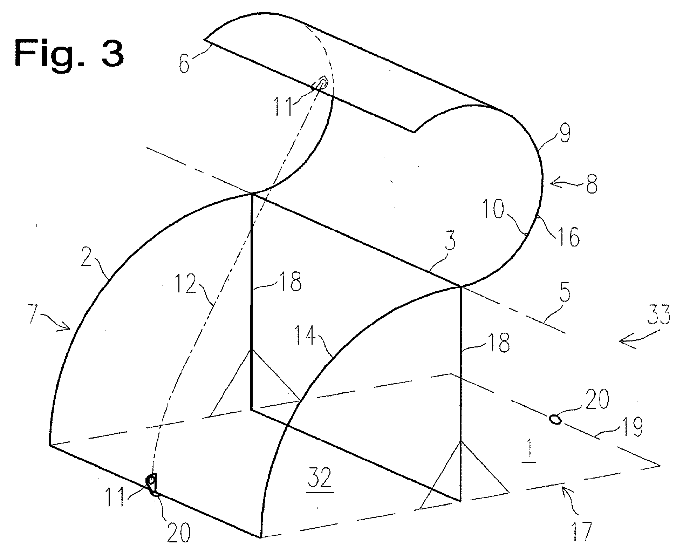

Fig. 3 verdeutlicht die Situation anhand einer axonometrischen Ansicht zu Fig. 2.

Fig. 4 zeigt in einer Schnittansicht analog zu Fig. 1 und Fig. 2 eine Situation mit dem beweglichen Abschnitt 9 und dem anderen beweglichen Abschnitt 14 in der zweiten Position 8. In diesem Fall werden zu beiden Seiten des Längsbalkens 3 Öffnungen 33 in den Innenraum 32 bzw. zur Grundfläche 1 oder dem Hochbeet 31 freigegeben.

In der axonometrischen Ansicht der Fig. 5 sind der bewegliche Abschnitt 9 und der andere bewegliche Abschnitt 14 in einer Zwischenposition 35 gezeigt. Diese kann sich ergeben, wenn der bewegliche Abschnitt 9 und der andere bewegliche Abschnitt 14 von der ersten 7 in die zweite Position 8 überführt werden oder umgekehrt.

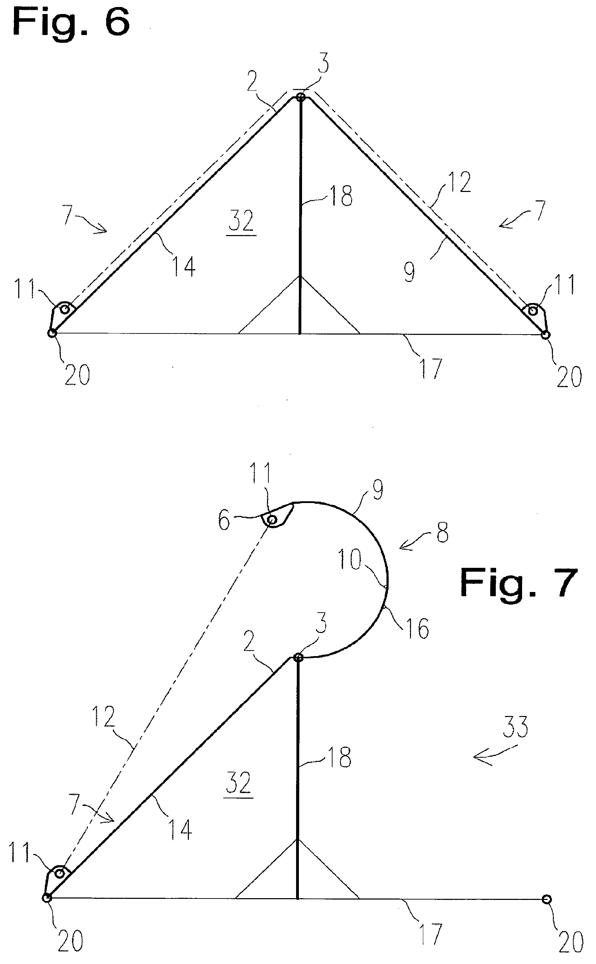

Fig. 6 zeigt eine alternative Ausführungsform in einer Schnittansicht völlig analog zu Fig. 1. Im Falle der Fig. 6 sind der bewegliche Abschnitt 9 und der andere bewegliche Abschnitt 14 in ihrer ersten Position jedoch nicht gekrümmt, sondern bilden eine Fläche.

In der zweiten Position 8, welche in Fig. 7 vom beweglichen Abschnitt 9 eingenommen wird, kommt es zu einer Krümmung des beweglichen Abschnitts 9 völlig analog zu Fig. 2. D.h. auch in diesem Fall liegt eine konvexe Krümmung der Außenseite 10 des beweglichen Abschnitts 9 in der zweiten Position 8 vor. Die hierdurch freigegebene Öffnung 33 in den Innenraum 32 bzw. zur Grundfläche 1 oder dem Hochbeet 31 fällt somit groß und damit bequem zugänglich aus.

Auch im Ausführungsbeispiel der Fig. 6 und Fig. 7 wird die zwischen den Ösen 11 gespannte elastische Schnur 12 verwendet, um den beweglichen Abschnitt 9 bzw. den anderen beweglichen Abschnitt 14 in der zweiten Position 8 zu halten.

Alternativ zur elastischen Schnur 12 kann auch eine unelastische Schnur 13 zum Halten des beweglichen Abschnitts 9 in der zweiten Position 8 verwendet werden. Fig. 8 zeigt eine solche Ausführungsvariante, wobei die erfindungsgemäße Vorrichtung auf einem Hochbeet 31 angeordnet ist, welches auf einem Untergrund 36 steht und eine Höhe 37 aufweist. D.h. in diesem Fall ist der Rahmen 17 auf dem Hochbeet 31 angeordnet, und der Längsbalken 3 wird von den Trägern 18 in der Höhe 4 über dem Hochbeet 31 gehalten. Die Höhe des Längsbalkens über dem Untergrund 36 ergibt sich in diesem Fall als Summe der Höhe 4 und der Höhe 37.

Die Vorrichtung gemäß Fig. 8 weist einen beweglichen Abschnitt 9 auf, der in seiner ersten Position 7 den Innenraum 32 begrenzt. In der ersten Position 7 ist die Innenseite 16 des beweglichen Abschnitts 9 konvex gekrümmt. Der bewegliche Abschnitt 9 wird in der ersten Position 7 mittels des Sperrelements 20 fixiert. Das Sperrelement 20 ist am Rahmen 17, vorzugsweise an einem Rahmenelement 19 (analog zu Fig. 5) montiert, könnte aber in diesem Fall natürlich auch direkt am Hochbeet 31 befestigt sein.

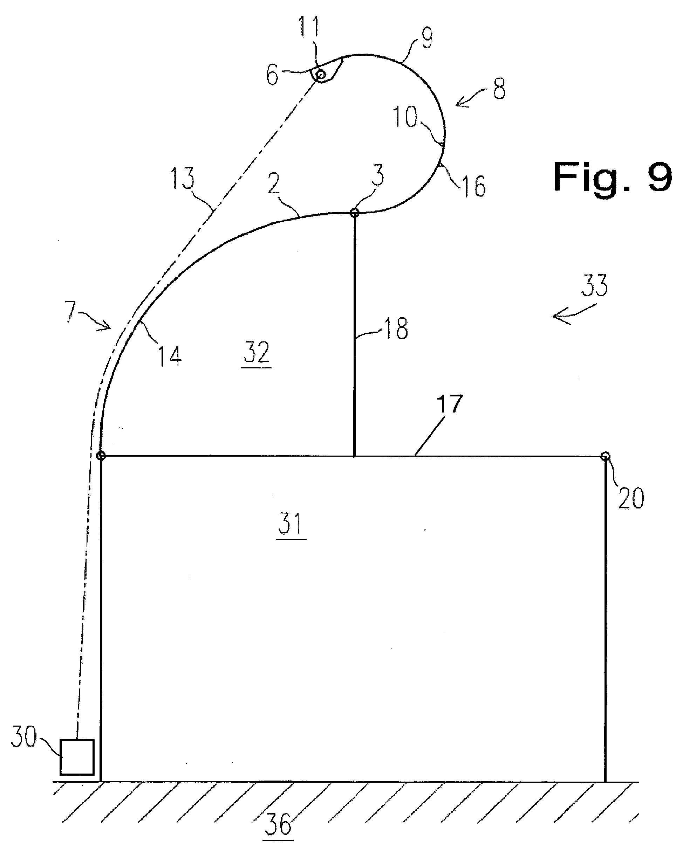

An der Außenseite 10 ist im Bereich der Längskante 6 (vgl. Fig. 9) des beweglichen Abschnitts 9 eine Öse 11 angeordnet, völlig analog zum Ausführungsbeispiel der Fig. 1. Die unelastische Schnur 13 ist mit einem Ende in der Öse 11 fixiert. Am anderen Ende der unelastischen Schnur 13 ist ein Gewicht 30 befestigt, das die unelastische Schnur 13 spannt.

In der ersten Position 7 des beweglichen Abschnitts 9 verläuft die unelastische Schnur 13 entlang der Außenseite 10 der Platte 2. Das Gewicht 30 befindet sich dabei in einer Höhe 38 über dem Untergrund 36.

Bei Überführung des beweglichen Abschnitts 9 von der ersten Position 7 in die zweite Position 8 bewegt sich das Gewicht 30 nach unten auf den Untergrund 36 zu und hält die unelastische Schnur 13 stets gespannt. In der zweiten Position 8 kommt es zu einer Krümmung des beweglichen Abschnitts 9 völlig analog zu Fig. 2. D.h. auch im Fall der Fig. 9 liegt eine konvexe Krümmung der Außenseite 10 des beweglichen Abschnitts 9 in der zweiten Position 8 vor. Die hierdurch freigegebene Öffnung 33 in den Innenraum 32 bzw. zum Hochbeet 31 fällt somit groß und damit bequem zugänglich aus.

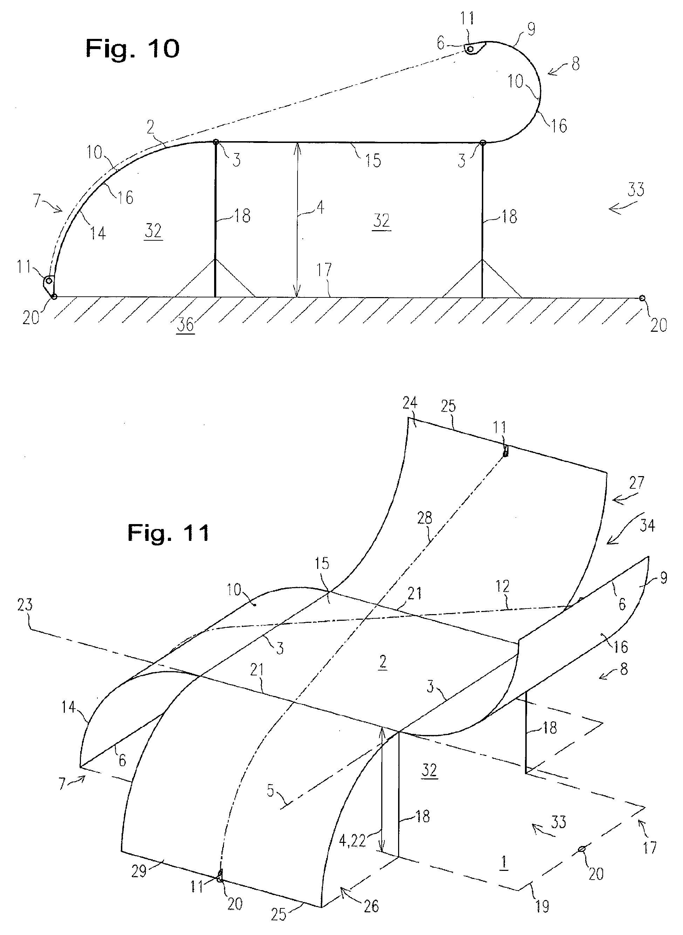

Um einen Bereich des Innenraums 32 zu erhalten, dessen Höhe in Richtung quer zur Längsrichtung 5 des Längsbalkens 3 nicht abnimmt, können bei einer weiteren Ausführungsform der erfindungsgemäßen Vorrichtung mehrere Längsbalken 3 zwischen dem beweglichen Abschnitt 9 und dem anderen beweglichen Abschnitt 14 angeordnet sein. Fig. 10 zeigt in einer Schnittansicht analog zu Fig. 1 eine Ausführungsvariante mit zwei Längsbalken 3.

Zwischen diesen Längsbalken 3 ist ein unbeweglicher Teil 15 angeordnet. Im gezeigten Ausführungsbeispiel sind der unbewegliche Teil 15 sowie der bewegliche Abschnitt 9 und der andere bewegliche Abschnitt 14 Bestandteile derselben Platte 2. Es sind aber selbstverständlich auch Ausführungsvarianten möglich, bei denen der unbewegliche Teil 15 als separates und nicht notwendigerweise plattenförmiges Element ausgeführt ist.

Die Höhe des unbeweglichen Teils 15 über dem Untergrund 36 bzw. der Grundfläche 1 entspricht im gezeigten Ausführungsbeispiel im Wesentlichen der Höhe 4 der Längsbalken 3. Die Längsbalken 3 sind mit Trägern 18, die zu einem am Untergrund 36 angeordneten Rahmen 17 gehören, in der Höhe 4 über dem Untergrund 36 bzw. der Grundfläche 1 gehalten.

In Fig. 10 ist der bewegliche Abschnitt 9 in der zweiten Position 8 gezeigt und der andere bewegliche Abschnitt 14 in der ersten Position 7. Um den beweglichen Abschnitt 9 (aber natürlich auch den anderen beweglichen Abschnitt 14) in der zweiten Position 8 zu halten, kommt im Ausführungsbeispiel der Fig. 10 eine elastische Schnur 12 zum Einsatz, völlig analog zu den Ausführungsbeispielen der Figuren 1 bis 7. D.h. im Ausführungsbeispiel der Fig. 10 ist die elastische Schnur 12 zwischen Ösen 11 des beweglichen Abschnitts 9 und des anderen beweglichen Abschnitts 14 gespannt.

Auch im Falle der Fig. 10 ist der bewegliche Abschnitt 9 in der zweiten Position 8 analog zu Fig. 2 gekrümmt. D.h. auch im Fall der Fig. 10 liegt eine konvexe Krümmung der Außenseite 10 des beweglichen Abschnitts 9 in der zweiten Position 8 vor. Die hierdurch freigegebene Öffnung 33 in den Innenraum 32 fällt somit groß und damit bequem zugänglich aus, sodass auch ein Fahrzeug durch die Öffnung 33 bequem in den Innenraum 32 gebracht werden kann. Im Falle der Fig. 10 bietet sich somit insbesondere die Nutzung der erfindungsgemäßen Vorrichtung als Garage an.

Fig. 11 zeigt eine axonometrische Ansicht einer Ausführungsform der erfindungsgemäßen Vorrichtung analog zur in Fig. 10 gezeigten, jedoch um einen zusätzlichen beweglichen Abschnitt 24 und einen anderen zusätzlichen beweglichen Abschnitt 29 erweitert. Im gezeigten Ausführungsbeispiel sind der zusätzliche bewegliche Abschnitt 24 und der andere zusätzliche bewegliche Abschnitt 29 Teil derselben Platte 2 wie der bewegliche Abschnitt 9 und der andere bewegliche Abschnitt 14 sowie des unbeweglichen Teils 15. Es versteht sich jedoch, dass auch der zusätzliche bewegliche Abschnitt 24 und der andere zusätzliche bewegliche Abschnitt 29 unabhängige Elemente sein können bzw. zu anderen Platten 2 gehören können.

Die Platte 2 (gegebenenfalls die Platten 2), zu welcher (welchen) der zusätzliche bewegliche Abschnitt 24 und der andere zusätzliche bewegliche Abschnitt 29 gehören, ist an zwei Querbalken 21 fixiert. Die Längsachsen 23 dieser Querbalken 21 verlaufen normal zu den Längsachsen 5 der Längsbalken 3. Wie die Längsbalken 3 werden die Querbalken 21 von Trägern 18, die vorzugsweise Teile des Rahmens 17 sind, in einer Höhe 22 über dem Untergrund 36 bzw. über der Grundfläche 1 gehalten. Im gezeigten Ausführungsbeispiel ist die Höhe 22 der Querbalken 21 identisch mit der Höhe 4 der Längsbalken 3. Die Platte 2 des zusätzlichen beweglichen Abschnitts 24 und des anderen zusätzlichen beweglichen Abschnitts 29 ist an den Querbalken 21 fixiert und steht quer zur Längsachse 23 der Querbalken 21 seitlich von den Querbalken 21 mit dem zusätzlichen beweglichen Abschnitt 24 und dem anderen zusätzlichen beweglichen Abschnitt 29 ab, wobei der zusätzliche bewegliche Abschnitt 24 und der andere zusätzliche bewegliche Abschnitt 29 einander gegenüberliegen.

Der zusätzliche bewegliche Abschnitt 24 und der andere zusätzliche bewegliche Abschnitt 29 weisen jeweils eine Querkante 25 auf, die parallel zu den Längsachsen 23 der Querbalken 21 verläuft. Die Erstreckung der Querkante 25 gemessen parallel zur Längsachse 23 der Querbalken 21 ist im gezeigten Ausführungsbeispiel gleich groß wie die Erstreckung der Querbalken 21, kann prinzipiell jedoch auch kürzer oder länger sein.

Fig. 11 zeigt eine Situation, in welcher sich der andere zusätzliche bewegliche Abschnitt 29 in einer dritten Position 26 befindet und den Innenraum 32 begrenzt. Im Ausführungsbeispiel der Fig. 11 ist der andere zusätzliche bewegliche Abschnitt 29 in der dritten Position 26 gekrümmt. Bezüglich der Innenseite 16 des anderen zusätzlichen beweglichen Abschnitts 29 liegt eine konvexe Krümmung vor, wodurch sich ein besonders großes Volumen des Innenraums 32 ergibt. Ein Teil der Innenseite 16 im Bereich der Querkante 25 des anderen zusätzlichen beweglichen Abschnitts 29 weist im in Fig. 11 gezeigten Fall zu einem Teil der Innenseite 16 des anderen zusätzlichen beweglichen Abschnitts 29 im Bereich des zugehörigen Querbalkens 21.

Um den Innenraum 32 bzw. die Grundfläche 1 zugänglich zu machen, können der zusätzliche bewegliche Abschnitt 24 und der andere zusätzliche bewegliche Abschnitt 29 in eine vierte Position 27 gebracht werden. In Fig. 11 ist der zusätzliche bewegliche Abschnitt 24 in der vierten Position 27 dargestellt. Hierbei ist der zusätzliche bewegliche Abschnitt 24 elastisch verformt und weist nun eine im Vergleich zur dritten Position 26 entgegengesetzte Krümmung auf. D.h. in der vierten Position 27 liegt eine konvexe Krümmung der Außenseite 10 vor. Ein Teil der Außenseite 10 im Bereich der Querkante 25 des zusätzlichen beweglichen Abschnitts 24 weist im in Fig. 11 gezeigten Fall zu einem Teil der Außenseite 10 des zusätzlichen beweglichen Abschnitts 24 im Bereich des zugehörigen Querbalkens 21.

In der vierten Position 27 gibt der zusätzliche bewegliche Abschnitt 24 somit eine - besonders große und damit bequem zugängliche - zusätzliche Öffnung 34 in den Innenraum 32 bzw. zur Grundfläche 1 frei. Der Benutzer hat somit Zugang zum Innenraum 32 aus zwei quer zueinander stehenden Richtungen, nämlich durch die Öffnung(en) 33 und die zusätzliche(n) Öffnung(en) 34.

Um den zusätzlichen beweglichen Abschnitt 24 in der vierten Position 27 zu halten, ist im Ausführungsbeispiel der Fig. 11 eine zusätzliche elastische Schnur 28 vorgesehen. Diese ist mit jedem ihrer beiden Enden in jeweils einer Öse 11 befestigt. Die Ösen 11 sind dabei im Bereich der Querkante 25 an der Außenseite 10 des zusätzlichen beweglichen Abschnitts 24 und des anderen zusätzlichen beweglichen Abschnitts 29 befestigt. Die zusätzliche elastische Schnur 28 ist zwischen diesen beiden Ösen 11 so gespannt, dass die Federkraft der zusätzlichen elastischen Schnur 28 den zusätzlichen beweglichen Abschnitt 24 in der vierten Position 27 hält. Es versteht sich, dass die Spannung bzw. Federkraft der zusätzlichen elastischen Schnur 28 auch die Überführung des zusätzlichen beweglichen Abschnitts 24 von der dritten 26 in die vierte Position 27 unterstützt. D.h. der Benutzer kann den zusätzlichen beweglichen Abschnitt 24 von der dritten 26 in die vierte Position 27 mit äußerst geringem Kraftaufwand überführen.

Die zusätzliche elastische Schnur 28 verläuft quer zur elastischen Schnur 12 und in Fig. 11 abschnittsweise entlang der Außenseite 10 des anderen zusätzlichen beweglichen Abschnitts 29. Sind sowohl der zusätzliche bewegliche Abschnitt 24 als auch der andere zusätzliche bewegliche Abschnitt 29 in der dritten Position (nicht dargestellt) so verläuft die zusätzliche elastische Schnur 28 entlang der Außenseite 10 des zusätzlichen beweglichen Abschnitts 24 und des anderen zusätzlichen beweglichen Abschnitts 29.

Um den anderen zusätzlichen beweglichen Abschnitt 29 und den zusätzlichen beweglichen Abschnitt 24 in der dritten Position 26 halten zu können, sind Sperrelemente 20 vorgesehen. Diese sind den Rahmenelemente 19 befestigt, die parallel zur Längsachse 23 der Querbalken 21 verlaufen. Die Sperrelemente 20 können beispielsweise als Riegel ausgeführt sein oder als Haken, die mit den Ösen 11 in Eingriff gebracht werden können. Die Sperrelemente 20 können gegebenenfalls aber auch direkt am Untergrund 36 oder der Grundfläche 1 befestigt sein (nicht dargestellt).

Werden der zusätzliche bewegliche Abschnitt 24 und der andere zusätzliche bewegliche Abschnitt 29 von der dritten 26 in die vierte Position 27 überführt (oder umgekehrt), so kann sich eine zusätzliche Zwischenposition ergeben. Diese ist vollständig analog zu der in Fig. 5 gezeigten Zwischenposition 35 und daher nicht extra dargestellt.

Alternativ zur zusätzlichen elastischen Schnur 28 kann auch eine zusätzliche unelastische Schnur zum Halten des zusätzlichen beweglichen Abschnitts 24 in der vierten Position 27 verwendet werden. Der diesbezügliche Aufbau ist völlig analog zu dem in den Figuren 8 und 9 gezeigten Aufbau und daher nicht extra dargestellt: der zusätzliche bewegliche Abschnitt 24 ersetzt den beweglichen Abschnitt 9; die zusätzliche unelastische Schnur ersetzt die unelastische Schnur 13; und ein zusätzliches Gewicht ersetzt das Gewicht 30.

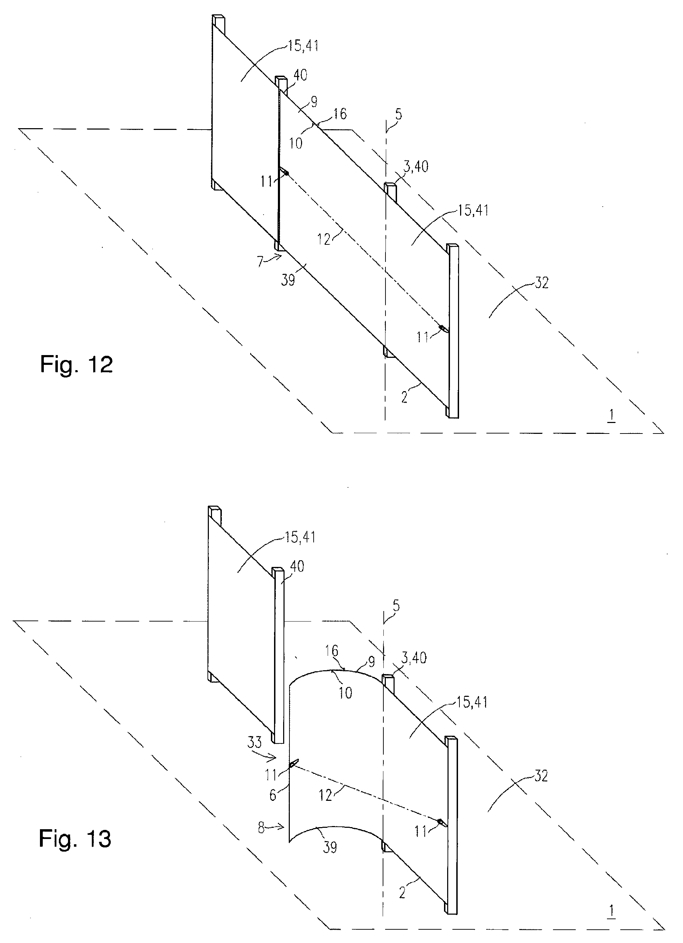

Fig. 12 zeigt die Verwendung einer erfindungsgemäßen Vorrichtung als Tür 39. In diesem Fall ist der Längsbalken 3 senkrecht angeordnet und die Längsachse 5 steht normal auf die Grundfläche 1. Der Längsbalken 3 ist dabei Teil eines Türstocks 40 der Tür 39. Die elastische Platte 2 ist am Längsbalken 3 fixiert, wobei die Längskante 6 des beweglichen Abschnitts 9 parallel zum Längsbalken 3 bzw. zu dessen Längsachse 5 verläuft. Zu beiden Seiten des Türstocks 40 sind unbewegliche Teile 15 angeordnet, die Wandelemente 41 ausbilden, wobei jener unbewegliche Teil 15, der an den Längsbalken 3 anschließt, im gezeigten Ausführungsbeispiel Teil derselben elastischen Platte 2 ist wie der bewegliche Abschnitt 9.

Fig. 12 zeigt den beweglichen Abschnitt 9 in dessen erster Position 7, d.h. die Tür 39 ist geschlossen. Die Innenseite 16 der Platte 2 bzw. des beweglichen Abschnitts 9 weist in den Innenraum 32, die Außenseite 10 weist in die entgegengesetzte Richtung. Im Ausführungsbeispiel der Fig. 12 muss der Innenraum 32 kein vollständig geschlossenes Volumen ausbilden. Wenn die Tür 39 bzw. die Wandelemente 41 beispielsweise Teil eines Zauns im Freien sind, dann bildet der vom Zaun begrenzte Raum den Innenraum 32, der in der Regel nach oben hin offen sein wird.

Die elastische Platte 2 ist im Ausführungsbeispiel der Fig. 12 so ausgelegt, dass deren Elastizität bzw. Eigenspannung den beweglichen Abschnitt 9 ohne äußere Einwirkung in der ersten Position 7 hält, obwohl die elastische Schnur 12 zwischen einer Öse 11, die am unbeweglichen Teil 15 der Platte 2 fixiert ist, und einer Öse 11, die im Bereich der Längskante 6 an der Außenseite 10 des beweglichen Abschnitts 9 fixiert ist, gespannt ist. Zusätzlich oder alternativ, wenn die Spannung der elastischen Schnur 12 entsprechend größer ist als die Eigenspannung der elastischen Platte 2, kann auch ein Sperrelement (nicht dargestellt) vorgesehen sein, das vorzugsweise am Türstock 40 angeordnet ist, um den beweglichen Abschnitt 9 in der ersten Position 7 zu fixieren.

Die Tür 39 wird geöffnet, indem der bewegliche Abschnitt 9 vom Benutzer in die zweite Position 8 überführt wird. Fig. 13 zeigt den beweglichen Abschnitt 9 in der zweiten Position 8, wobei die Außenseite 10 in der zweiten Position 8 konvex gekrümmt ist, um die Öffnung 33 möglichst vollständig freizugeben.

Beim Öffnen der Tür 39 bzw. beim Bewegen des beweglichen Abschnitts 9 von der ersten Position 7 in die zweite Position 8 wird ein Totpunkt überwunden, bei dem sich die Federkraft der elastischen Schnur 12 und die Eigenspannung der elastischen Platte 2 die Waage halten. Bis zum Erreichen des Totpunkts unterstützt die Federkraft der elastischen Schnur 12 den Benutzer beim Öffnen der Tür 39. Nach Überwindung des Totpunkts genügt im Prinzip die Federkraft der elastischen Schnur 12, um den beweglichen Abschnitt 9 endgültig in die zweite Position 8 zu bewegen und dort zu halten.

### BEZUGSZEICHENLISTE

- 1: Grundfläche
- 2: Platte
- 3: Längsbalken
- 4: Höhe des Längsbalkens über der Grundfläche oder dem Hochbeet
- 5: Längsachse des Längsbalkens
- 6: Längskante
- 7: Erste Position des beweglichen Abschnitts
- 8: Zweite Position des beweglichen Abschnitts
- 9: Beweglicher Abschnitt
- 10: Außenseite der Platte
- 11: Öse
- 12: Elastische Schnur
- 13: Unelastische Schnur
- 14: anderer beweglicher Abschnitt
- 15: Unbeweglicher Teil
- 16: Innenseite der Platte
- 17: Rahmen
- 18: Träger
- 19: Rahmenelement
- 20: Sperrelement
- 21: Querbalken
- 22: Höhe des Querbalkens über der Grundfläche
- 23: Längsachse des Querbalkens
- 24: Zusätzlicher beweglicher Abschnitt
- 25: Querkante
- 26: Dritte Position des zusätzlichen beweglichen Abschnitts
- 27: Vierte Position des zusätzlichen beweglichen Abschnitts
- 28: Zusätzliche elastische Schnur
- 29: Anderer zusätzlicher beweglicher Abschnitt
- 30: Gewicht
- 31: Hochbeet
- 32: Innenraum
- 33: Öffnung
- 34: Zusätzliche Öffnung
- 35: Zwischenposition
- 36: Untergrund
- 37: Höhe des Hochbeets
- 38: Höhe des Gewichts
- 39: Tür
- 40: Türstock
- 41: Wandelement

## Patentansprüche

1. Vorrichtung zur Abdeckung oder Überdachung einer Grundfläche (1), eines raumbildenden Aufbaus (31) oder einer Maschine, umfassend mindestens eine elastische Platte (2) mit einer Außenseite (10) und einer Innenseite (16), wobei die Vorrichtung mindestens einen Längsbalken (3) umfasst, der in einer Höhe (4) über und/oder in einem, vorzugsweise rechten, Winkel zu der Grundfläche (1), dem raumbildenden Aufbau (31) oder der Maschine angeordnet ist, dass die mindestens eine Platte (2) am Längsbalken (3) befestigt ist und quer zur Längsachse (5) des mindestens einen Längsbalkens (3) auf zumindest einer Seite von diesem mit mindestens einem beweglichen Abschnitt (9) absteht, dass der mindestens eine bewegliche Abschnitt (9) eine dem Längsbalken (3) gegenüber liegende Längskante (6) beinhaltet und dass der mindestens eine bewegliche Abschnitt (9) durch elastische Verformung von einer ersten Position (7) in eine zweite Position (8) überführbar ist, wobei der mindestens eine bewegliche Abschnitt (9) in der ersten Position (7) einen Innenraum (32) begrenzt und in der zweiten Position (8) eine Öffnung (33) in den Innenraum (32) freigibt, **dadurch gekennzeichnet, dass** der mindestens eine bewegliche Abschnitt (9) in seiner zweiten Position (8) gekrümmt ist, wobei Teile der Außenseite (10) des mindestens einen beweglichen Abschnitts (9) einander zugewandt sind, wobei insbesondere mindestens ein Teil der Außenseite (10) im Bereich der Längskante (6) des mindestens einen beweglichen Abschnitts (9) mindestens einem Teil der Außenseite (10) im Bereich des mindestens einen Längsbalkens (3) zugewandt ist.

2. Vorrichtung nach Anspruch 1, **dadurch gekennzeichnet, dass** an der Außenseite (10) im Bereich der Längskante (6) des mindestens einen beweglichen Abschnitts (9) ein Befestigungsmittel, vorzugsweise eine Öse (11), für mindestens ein Haltemittel, vorzugsweise für eine Schnur (12, 13) vorgesehen ist.

3. Vorrichtung nach Anspruch 2, **dadurch gekennzeichnet, dass** mindestens ein elastisches Haltemittel, vorzugsweise mindestens eine elastische Schnur (12) oder mindestens eine Zugfeder, am Befestigungsmittel (11) des mindestens einen beweglichen Abschnitts (9) befestigt und gespannt ist, dessen Federkraft den mindestens einen beweglichen Abschnitt (9) in seiner zweiten Position (8) hält.

4. Vorrichtung nach Anspruch 3, **dadurch gekennzeichnet, dass** das mindestens eine elastische Haltemittel (12) das Befestigungsmittel (11) eines beweglichen Abschnitts (9) mit dem Befestigungsmittel (11) eines anderen beweglichen Abschnitts (14) verbindet, wobei der eine bewegliche Abschnitt (9) und der andere bewegliche Abschnitt (14) quer zur Längsachse (5) des Längsbalkens (3) auf gegenüberliegenden Seiten von diesem angeordnet sind, dass das mindestens eine elastische Haltemittel (12) zwischen den Befestigungsmitteln (11) gespannt ist und dass das mindestens eine elastische Haltemittel (12) zumindest abschnittsweise entlang der Außenseite (10) der mindestens einen elastischen Platte (2) verläuft, wenn sich der eine bewegliche Abschnitt (9) und der andere bewegliche Abschnitt (14) in ihrer ersten Position (7) befinden.

5. Vorrichtung nach Anspruch 4, **dadurch gekennzeichnet, dass** der eine bewegliche Abschnitt (9) und der andere bewegliche Abschnitt (14), die mittels des mindestens einen elastischen Haltemittels (12) verbunden sind, jeweils zur selben elastischen Platte (2) gehören.

6. Vorrichtung nach einem der Ansprüche 4 bis 5, **dadurch gekennzeichnet, dass** zwischen dem einen beweglichen Abschnitt (9) und dem anderen beweglichen Abschnitt (14) mindestens zwei Längsbalken (3) angeordnet sind.

7. Vorrichtung nach Anspruch 2, **dadurch gekennzeichnet, dass** mindestens ein unelastisches Haltemittel, vorzugsweise eine unelastische Schnur (13) oder eine Kette, am Befestigungsmittel (11) des mindestens einen beweglichen Abschnitts (9) befestigt und, vorzugsweise mittels eines Gewichts (30) oder einer motorisierten Winde, gespannt ist, um den mindestens einen beweglichen Abschnitt (9) in seiner zweiten Position (8) zu halten.

8. Vorrichtung nach einem der Ansprüche 1 bis 7, **dadurch gekennzeichnet, dass** der mindestens eine bewegliche Abschnitt (9) in seiner ersten Position (7) gekrümmt ist, wobei Teile der Innenseite (16) des mindestens einen beweglichen Abschnitts (9) einander zugewandt sind, wobei insbesondere mindestens ein Teil der Innenseite (16) im Bereich der Längskante (6) des mindestens einen beweglichen Abschnitts (9) mindestens einem Teil der Innenseite (16) im Bereich des mindestens einen Längsbalkens (3) zugewandt ist.

9. Vorrichtung nach einem der Ansprüche 1 bis 8, **dadurch gekennzeichnet, dass** mindestens ein Querbalken (21) vorgesehen ist, dessen Längsachse (23) quer, vorzugsweise normal zur Längsachse (5) des mindestens einen Längsbalkens (3) verläuft, dass der mindestens eine Querbalken (21) in einer Höhe (22), vorzugsweise derselben Höhe (4) wie der mindestens eine Längsbalken (3), über der Grundfläche (1), dem raumbildenden Aufbau (31) oder der Maschine angeordnet ist, dass die mindestens eine elastische Platte (2) am mindestens einen Querbalken (21) befestigt ist und quer zur Längsachse (23) des mindestens einen Querbalkens (21) auf zumindest einer Seite von diesem mit mindestens einem zusätzlichen beweglichen Abschnitt (24) absteht, dass der mindestens eine zusätzliche bewegliche Abschnitt (24) eine dem Querbalken (21) gegenüber liegende Querkante (25) beinhaltet und dass der mindestens eine zusätzliche bewegliche Abschnitt (24) durch elastische Verformung von einer dritten Position (26) in eine vierte Position (27) überführbar ist, wobei der mindestens eine zusätzliche bewegliche Abschnitt (24) in der dritten Position (26) den Innenraum (32) begrenzt und in der vierten Position (8) eine zusätzliche Öffnung (34) in den Innenraum (32) freigibt.

10. Vorrichtung nach Anspruch 9, **dadurch gekennzeichnet, dass** der mindestens eine zusätzliche bewegliche Abschnitt (24) in seiner vierten Position (27) gekrümmt ist, wobei Teile der Außenseite (10) des mindestens einen zusätzlichen beweglichen Abschnitts (24) einander zugewandt sind, wobei insbesondere mindestens ein Teil der Außenseite (10) im Bereich der Querkante (25) des mindestens einen zusätzlichen beweglichen Abschnitts (24) mindestens einem Teil der Außenseite (10) im Bereich des mindestens einen Querbalkens (21) zugewandt ist.

11. Vorrichtung nach einem der Ansprüche 9 bis 10, **dadurch gekennzeichnet, dass** an der Außenseite (10) im Bereich der Querkante (25) des mindestens einen zusätzlichen beweglichen Abschnitts (24) ein Befestigungsmittel, vorzugsweise eine Öse (11), für mindestens ein zusätzliches Haltemittel, vorzugsweise für mindestens eine zusätzliche Schnur (28) vorgesehen ist.

12. Vorrichtung nach Anspruch 11, **dadurch gekennzeichnet, dass** mindestens ein zusätzliches elastisches Haltemittel, vorzugsweise mindestens eine zusätzliche elastische Schnur (28) oder mindestens eine zusätzliche Zugfeder, am Befestigungsmittel (11) des mindestens einen zusätzlichen beweglichen Abschnitts (24) befestigt und gespannt ist, dessen Federkraft den mindestens einen zusätzlichen beweglichen Abschnitt (24) in seiner vierten Position (27) hält.

13. Vorrichtung nach Anspruch 11, **dadurch gekennzeichnet, dass** mindestens ein zusätzliches unelastisches Haltemittel, vorzugsweise mindestens eine zusätzliche unelastische Schnur oder mindestens eine zusätzliche Kette, am Befestigungsmittel (11) des mindestens einen zusätzlichen beweglichen Abschnitts (24) befestigt und, vorzugsweise mittels eines zusätzlichen Gewichts oder einer zusätzlichen motorisierten Winde, gespannt ist, um den mindestens einen zusätzlichen beweglichen Abschnitt (24) in seiner vierten Position (27) zu halten.

14. Vorrichtung nach einem der Ansprüche 1 bis 13, **dadurch gekennzeichnet, dass** der mindestens eine Längsbalken (3) und/oder Querbalken (21) mit einem Rahmen (17) verbunden oder Teil des Rahmens (17) ist, und dass der Rahmen (17) Träger (18) aufweist, die sich quer zum mindestens einen Längsbalken (3) und/oder Querbalken (21) und in Richtung von der Grundfläche (1), dem raumbildenden Aufbau (31) oder der Maschine zum mindestens einen Längsbalken (3) und/oder Querbalken (21) erstrecken.

## Claims

1. An apparatus for covering or roofing a base area (1), a space-defining structure (31) or a machine, comprising at least one elastic plate (2) having an exterior side (10) and an interior side (16), wherein the apparatus comprises at least one longitudinal beam (3) which is arranged at a height (4) above and/or at a preferably right angle to the base area (1), the space-defining structure (31) or the machine, the at least one plate (2) is fixed to the longitudinal beam (3) and, transversely to the longitudinal axis (5) of the at least one longitudinal beam (3), it protrudes on at least one side therefrom with at least one movable section (9), the at least one movable section (9) contains a longitudinal edge (6) opposite the longitudinal beam (3), and the at least one movable section (9) can be transferred by elastic deformation from a first position (7) to a second position (8), wherein the at least one movable section (9) delimits in the first position (7) an interior space (32) and releases in the second position (8) an opening (33) into the interior space (32), **characterized in that** the at least one movable section (9) is curved in its second position (8), wherein parts of the exterior side (10) of the at least one movable section (9) face each other, wherein especially at least a portion of the exterior side (10), in the region of the longitudinal edge (6) of the at least one movable section (9), faces at least a portion of the exterior side (10) in the region of the at least one longitudinal beam (3).

2. An apparatus according to claim 1, **characterized in that** a fastening means, preferably an eye (11), for at least one retaining means, preferably for a cord (12, 13), is provided on the exterior side (10) in the region of the longitudinal edge (6) of the at least one movable section (9).

3. An apparatus according to claim 2, **characterized in that** at least one elastic retaining means, preferably at least one elastic cord (12) or at least one tension spring, is fastened to and tensioned on the fastening means (11) of the at least one movable section (9), the spring force of which holds the at least one movable section (9) in its second position (8).

4. An apparatus according to claim 3, **characterized in that** the at least one elastic retaining means (12) connects the fastening means (11) of a movable section (9) to the fastening means (11) of another movable section (14), wherein the one movable section (9) and the other movable section (14) are arranged transversely to the longitudinal axis (5) of the longitudinal beam (3) on opposite sides thereof, the at least one elastic retaining means (12) is tensioned between the fastening means (11), and the at least one elastic retaining means (12) runs at least in sections along the exterior side (10) of the at least one elastic plate (2) when the one movable section (9) and the other movable section (14) are situated in their first position (7).

5. An apparatus according to claim 4, **characterized in that** the one movable section (9) and the other movable section (14), which are connected by means of the at least one elastic retaining means (12), each belong to the same elastic plate (2).

6. An apparatus according to one of the claims 4 to 5, **characterized in that** at least two longitudinal beams (3) are arranged between the one movable section (9) and the other movable section (14).

7. An apparatus according to claim 2, **characterized in that** at least one non-elastic retaining means, preferably a non-elastic cord (30) or a chain, is fastened to the fastening means (11) of the at least one movable section (9), and is tensioned thereon, preferably by means of a weight (30) or a motorised winch, in order to hold the at least one movable section (9) in its second position (8).

8. An apparatus according to one of the claims 1 to 7, **characterized in that** the at least one movable section (9) is curved in its first position (7), wherein parts of the interior side (16) of the at least one movable section (9) face each other, wherein especially at least a part of the interior side (16), in the region of the longitudinal edge (6) of the at least one movable section (9), faces at least a part of the interior side (16) in the region of the at least one longitudinal beam (3).

9. An apparatus according to one of the claims 1 to 8, **characterized in that** at least one crossbeam (21) is provided, whose longitudinal axis (23) extends transversely, preferably normally, to the longitudinal axis (5) of the at least one longitudinal beam (3), the at least one crossbeam (21) is arranged at an altitude (22), preferably the same altitude (4) as the at least one longitudinal beam (3), above the base area (1), the space-defining structure (31) or the machine, the at least one elastic plate (2) is fixed to the at least one crossbeam (21), and protrudes, transversely to the longitudinal axis (23) of the at least one crossbeam (21), on at least one side therefrom with at least one additional movable section (24), the at least one additional movable section (24) comprises a transverse edge (25) opposite the transverse beam (21), and the at least one additional movable section (24) can be transferred by elastic deformation from a third position (26) to a fourth position (27), wherein the at least one additional movable section (24) delimits in the third position (26) the interior space (32), and releases in the fourth position (8) an additional opening (34) into the interior space (32).

10. An apparatus according to claim 9, **characterized in that** the at least one additional movable section (24) is curved in its fourth position (27), wherein parts of the exterior side (10) of the at least one additional movable section (24) face each other, wherein especially at least a part of the exterior side (10), in the region of the transverse edge (25) of the at least one additional movable section (24), faces at least a portion of the exterior side (10) in the region of the at least one crossbeam (21).

11. An apparatus according to one of the claims 9 to 10, **characterized in that** a fastening means, preferably an eye (11), is provided for at least one additional retaining means, preferably for at least one additional cord (28), on the exterior side (10) in the region of the transverse edge (25) of the at least one additional movable section (24).

12. An apparatus according to claim 11, **characterized in that** at least one additional elastic retaining means, preferably at least one additional elastic cord (20) or at least one additional tension spring, is fastened to and tensioned on the fastening means (11) of the at least one additional movable section (24), the spring force of said spring holding the at least one additional movable section (24) in its fourth position (27).

13. An apparatus according to claim 11, **characterized in that** at least one additional non-elastic retaining means, preferably at least one additional non-elastic cord or at least one additional chain, is fastened to the fastening means (11) of the at least one additional movable section (24), and, preferably by means of an additional weight or an additional motorised winch, is tensioned in order to hold the at least one additional movable section (24) in its fourth position (27).

14. An apparatus according to one of the claims 1 to 13, **characterized in that** the at least one longitudinal beam (3) and/or the crossbeam (21) is connected to a frame (17) or is part of the frame (17), and the frame (17) comprises supports (18) which extend transversely to the at least one longitudinal beam (3) and/or crossbeam (21) and in the direction from the base area (1), the space-defining structure (31) or the machine to the at least one longitudinal beam (3) and/or crossbeam (21).

## Revendications

1. Dispositif pour la couverture ou la toiture d'une surface de base (1), d'une structure formant un espace (31) ou d'une machine, comprenant au moins un panneau élastique (2) avec une face extérieure (10) et une face intérieure (16), lequel dispositif comprend au moins un longeron (3) qui est disposé à une hauteur (4) au-dessus et/ou sous un angle, de préférence droit, par rapport à la surface de base (1), à la structure formant un espace (31) ou à la machine, l'au moins un panneau (2) est fixé sur le longeron (3) et dépasse transversalement par rapport à l'axe longitudinal (5) de l'au moins un longeron (3) sur au moins un côté de celui-ci avec au moins une partie mobile (9), que l'au moins une partie mobile (9) comprend une arête longitudinale (6) faisant face au longeron (3) et que l'au moins une partie mobile (9) peut être amenée par déformation élastique d'une première position (7) à une deuxième position (8), l'au moins une partie mobile (9) délimitant un espace intérieur (32) dans la première position (7) et dégageant une ouverture (33) dans l'espace intérieur (32) dans la deuxième position (8), **caractérisé en ce que** l'au moins une partie mobile (9) est courbée dans sa deuxième position (8), des parties de la face extérieure (10) de l'au moins une partie mobile (9) étant tournées l'une vers l'autre, au moins une partie de la face extérieure (10) au niveau de l'arête longitudinale (6) de l'au moins une partie mobile (9) étant en particulier tournée vers au moins une partie de la face extérieure (10) au niveau de l'au moins un longeron (3).

2. Dispositif selon la revendication 1, **caractérisé en ce qu'**il est prévu sur la face extérieure (10) au niveau de l'arête longitudinale (6) de l'au moins une partie mobile (9) un moyen de fixation, de préférence un oeillet (11), pour au moins un moyen de maintien, de préférence pour un cordon (12, 13).

3. Dispositif selon la revendication 2, **caractérisé en ce qu'**au moins un moyen de maintien élastique, de préférence au moins un cordon élastique (12) ou au moins un ressort de traction, dont la force de rappel maintient l'au moins une partie mobile (9) dans sa deuxième position (8), est fixé au moyen de fixation (11) de l'au moins une partie mobile (9) et tendu.

4. Dispositif selon la revendication 3, **caractérisé en ce que** l'au moins un moyen de maintien élastique (12) relie le moyen de fixation (11) d'une partie mobile (9) au moyen de fixation (11) d'une autre partie mobile (14), la partie mobile (9) et l'autre partie mobile (14) étant disposées transversalement par rapport à l'axe longitudinal (5) du longeron (3) sur des côtés opposés de celui-ci, **en ce que** l'au moins un moyen de maintien élastique (12) est tendu entre les moyens de fixation (11) et **en ce que** l'au moins un moyen de maintien élastique (12) passe au moins en partie le long de la face extérieure (10) de l'au moins un panneau élastique (2) quand la partie mobile (9) et l'autre partie mobile (14) se trouvent dans leur première position (7).

5. Dispositif selon la revendication 4, **caractérisé en ce que** la partie mobile (9) et l'autre partie mobile (14), qui sont reliées au moyen de l'au moins un moyen de maintien élastique (12), font partie du même panneau élastique (2).

6. Dispositif selon l'une des revendications 4 à 5, **caractérisé en ce qu'**au moins deux longerons (3) sont disposés entre la partie mobile (9) et l'autre partie mobile (14).

7. Dispositif selon la revendication 2, **caractérisé en ce qu'**au moins un moyen de maintien inélastique, de préférence un cordon inélastique (13) ou une chaîne, est fixé au moyen de fixation (11) de l'au moins une partie mobile (9) et tendu, de préférence au moyen d'un poids (30) ou d'un treuil motorisé, afin de maintenir l'au moins une partie mobile (9) dans sa deuxième position (8).

8. Dispositif selon l'une des revendications 1 à 7, **caractérisé en ce que** l'au moins une partie mobile (9) est courbée dans sa première position (7), des parties de la face intérieure (16) de l'au moins une partie mobile (9) étant tournées l'une vers l'autre, au moins une partie de la face intérieure (16) au niveau de l'arête longitudinale (6) de l'au moins une partie mobile (9) étant en particulier tournée vers au moins une partie de la face intérieure (16) au niveau de l'au moins un longeron (3).

9. Dispositif selon l'une des revendications 1 à 8, **caractérisé en ce qu'**il est prévu au moins une traverse (21), dont l'axe longitudinal (23) est transversal par rapport à l'axe longitudinal (5) de l'au moins un longeron (3), de préférence perpendiculaire, **en ce que** l'au moins une traverse (21) est disposée à une hauteur (22), de préférence à la même hauteur (4) que l'au moins un longeron (3), au-dessus de la surface de base (1), de la structure formant un espace (31) ou de la machine, que l'au moins un panneau élastique (2) est fixé sur au moins une traverse (21) et dépasse transversalement par rapport à l'axe longitudinal (23) de l'au moins une traverse (21) sur au moins un côté de celle-ci avec au moins une partie mobile supplémentaire (24), que l'au moins une partie mobile supplémentaire (24) comporte une arête transversale (25) faisant face à la traverse (21) et que l'au moins une partie mobile supplémentaire (24) peut être amenée par déformation élastique d'une troisième position (26) à une quatrième position (27), l'au moins une partie mobile supplémentaire (24) délimitant l'espace intérieur (32) dans la troisième position (26) et dégageant une ouverture supplémentaire (32) dans l'espace intérieur (34) dans la quatrième position (8).

10. Dispositif selon la revendication 9, **caractérisé en ce que** l'au moins une partie mobile supplémentaire (24) est courbée dans sa quatrième position (27), des parties de la face extérieure (10) de l'au moins une partie mobile supplémentaire (24) étant tournées les unes vers les autres, au moins une partie de la face extérieure (10) au niveau de l'arête transversale (25) de l'au moins un partie mobile supplémentaire (24) étant en particulier tournée vers au moins une partie de la face extérieure (10) au niveau de l'au moins une traverse (21).

11. Dispositif selon l'une des revendications 9 à 10, **caractérisé en ce qu'**il est prévu sur la face extérieure (10) au niveau de l'arête transversale (25) de l'au moins un partie mobile supplémentaire (24) un moyen de fixation, de préférence un oeillet (11), pour au moins un moyen de maintien supplémentaire, de préférence pour au moins un cordon supplémentaire (28).

12. Dispositif selon la revendication 11, **caractérisé en ce qu'**au moins un moyen de maintien élastique supplémentaire, de préférence au moins un cordon élastique supplémentaire (28) ou au moins un ressort de traction supplémentaire, est fixé au moyen de fixation (11) de l'au moins une partie mobile supplémentaire (24) et tendu, sa force de rappel maintenant l'au moins une partie mobile supplémentaire (24) dans sa quatrième position (27).

13. Dispositif selon la revendication 11, **caractérisé en ce qu'**au moins un moyen de maintien inélastique supplémentaire, de préférence au moins un cordon inélastique supplémentaire ou au moins une chaîne supplémentaire, est fixé au moyen de fixation (11) de l'au moins une partie mobile supplémentaire (24) et tendu, de préférence au moyen d'un poids supplémentaire ou d'un treuil motorisé supplémentaire, afin de maintenir l'au moins une partie mobile supplémentaire (24) dans sa quatrième position (27).

14. Dispositif selon l'une des revendications 1 à 13, **caractérisé en ce que** l'au moins un longeron (3) et/ou l'au moins une traverse (21) sont reliés à un cadre (17) ou une partie du cadre (17) et **en ce que** le cadre (17) présente des supports (18) qui s'étendent transversalement par rapport à l'au moins un longeron (3) et/ou à l'au moins une traverse (21) et en direction de la surface de base (1), de la structure formant un espace (31) ou de la machine vers l'au moins un longeron (3) et/ou l'au moins une traverse (21).
